# EUROPEAN PATENT APPLICATION

(11) **EP 4 814 661 A1**
(43) Date of publication of application: **30.09.2026**
(21) Application number: 25186536.6
(22) Date of filing: 01.07.2025
(51) Int. Cl.: G06F 3/01

(54) **CONTROL DEVICE, PROGRAM, DISPLAY DEVICE, AND CONTROL METHOD**

(30) Priority: 26.03.2025 JP 2025051371
(71) Applicant: FUJIFILM Business Innovation Corp., Minato-ku Tokyo (JP)
(72) Inventor: SASAKI, Hirotake, Ebina-shi, Kanagawa (JP); KANEKO, Atsuki, Yokohama-shi, Kanagawa (JP); KATO, Ryoma, Yokohama-shi, Kanagawa (JP)
(74) Representative: Becker Kurig & Partner Patentanwälte mbB

(57) **Abstract**

A control device includes a processor, in which the control device controls a display device that displays an image appearing within a field of view of a user who visually recognizes a real space, and the processor is configured to display, via the display device, a corresponding image that is an image visible in a form associated with an object installation region that is a region in which an object is placed, among regions on a floor surface existing in the real space visually recognized by the user, and not display the corresponding image or display the corresponding image in a different display form for the object installation region in which a specific object is placed.

## Description

### BACKGROUND OF THE INVENTION

### (i) Field of the Invention

The present invention relates to a control device, a program, a display device, and a control method.

### (ii) Description of Related Art

JP2011-227879A discloses processing of specifying a dangerous target included in a field of view based on device positional information, azimuth information, posture information, and dangerous range information and dangerous target positional information, generating a dangerous range image for the specified dangerous target, and displaying the dangerous range image on a display unit.

JP2024-94491A discloses processing of determining whether or not an interlock condition corresponding to an operation part is satisfied based on the obtained image and prohibiting the operation of the operation part in a case where the interlock condition is not satisfied.

JP2014-178932A discloses processing of determining whether or not a delay occurs in work on an automatic machine, determining the current step in a case where it is determined that the delay occurs in the work on the automatic machine, and outputting support information for supporting the work in the current step.

### SUMMARY OF THE INVENTION

In a case where a corresponding image corresponding to a region in which an object is placed among the regions on the floor surface is displayed within the field of view of the user, the user can more clearly know the presence of the object through the corresponding image.

On the other hand, in a case where the corresponding image is displayed, a state in which the corresponding image is displayed between the user and the object may occur. In this case, it is difficult for the user to visually recognize the object.

An object of the present invention is to make it easier for the user to visually recognize an object as compared with a case where a corresponding image corresponding to a region is displayed in a form corresponding to the entire region in which the object is placed among the regions on the floor surface and a case where a display form of the corresponding image is not changed.

According to a first aspect of the present invention, there is provided a control device including a processor, in which the control device controls a display device that displays an image appearing within a field of view of a user who visually recognizes a real space, and the processor is configured to display, via the display device, a corresponding image that is an image visible in a form associated with an object installation region that is a region in which an object is placed, among regions on a floor surface existing in the real space visually recognized by the user, and not display the corresponding image or display the corresponding image in a different display form for the object installation region in which a specific object is placed.

According to a second aspect of the present invention, in the control device according to the first aspect, the processor may be configured to not display the corresponding image or display the corresponding image in the different display form for the object installation region in which an object designated by the user is placed.

According to a third aspect of the present invention, in the control device according to the second aspect, an object corresponding image that is an image representing an object and is generated based on three-dimensional data may be displayed within the field of view by the display device, the user may perform an operation such that the object corresponding image appearing within the field of view of the user is visible in an overlapping manner on the specific object and designates the specific object, and the processor may be configured to not display the corresponding image or display the corresponding image in the different display form for the object installation region in which the specific object designated by the operation of making the object corresponding image visible in an overlapping manner on the specific object is placed.

According to a fourth aspect of the present invention, in the control device according to the first aspect, the processor may be configured to not display the corresponding image or display the corresponding image in the different display form for the object installation region in which a specific type of object is placed.

According to a fifth aspect of the present invention, in the control device according to the first aspect, the processor may be configured to not display the corresponding image or display the corresponding image in the different display form for the object installation region in which an object matching a predetermined registered object is placed.

According to a sixth aspect of the present invention, in the control device according to the first aspect, the processor may be configured to not display the corresponding image or display the corresponding image in the different display form for the object installation region in which an object to which a predetermined image is added is placed.

According to a seventh aspect of the present invention, in the control device according to the first aspect, the processor may be configured to not display the corresponding image or display the corresponding image in the different display form for the object installation region in which an object that is a target of work performed by the user is placed.

According to an eighth aspect of the present invention, in the control device according to any one of the first to seventh aspects, the processor may be configured to, in a case where a part of the specific object is moved in a direction intersecting a vertical direction and the part reaches a space located above an adjacent region that is adjacent to the object installation region in which the specific object is placed and in which the object is not placed, display, via the display device, a partial corresponding image that is an image that is visible in a form associated with the part.

According to a ninth aspect of the present invention, in the control device according to the eighth aspect, the processor may be configured to, in a case where the part that has reached the space located above the adjacent region is a predetermined specific portion, not display the partial corresponding image or display the partial corresponding image in a different display form.

According to a tenth aspect of the present invention, in the control device according to the ninth aspect, the processor may be configured to, in a case where the part that has reached the space located above the adjacent region is a portion that is a target of an operation performed by the user, not display the partial corresponding image or display the partial corresponding image in the different display form.

According to an eleventh aspect of the present invention, there is provided a program executed by a computer that controls a display device that displays an image appearing within a field of view of a user who visually recognizes a real space, the program causing the computer to realize a function of displaying, via the display device, a corresponding image that is an image visible in a form associated with an object installation region that is a region in which an object is placed, among regions on a floor surface existing in the real space visually recognized by the user, and a function of not displaying the corresponding image or of displaying the corresponding image in a different display form for the object installation region in which a specific object is placed.

According to a twelfth aspect of the present invention, there is provided a display device that displays an image appearing within a field of view of a user who visually recognizes a real space, in which the display device displays a corresponding image that is an image visible in a form associated with an object installation region that is a region in which an object is placed, among regions on a floor surface existing in the real space visually recognized by the user, and the display device comprises an acquisition unit that acquires three-dimensional data of an object corresponding image that is an image representing the object and is displayed within the field of view by the display device and that is used for designating the region on the floor surface or designating the object placed on the floor surface.

According to a thirteenth aspect of the present invention, in the display device according to the twelfth aspect, in a region of the object installation region that is designated by using the object corresponding image displayed by the display device based on the three-dimensional data, the corresponding image may be not displayed or the corresponding image in a different display form may be displayed.

According to a fourteenth aspect of the present invention, there is provided a control method including displaying, via the display device, a corresponding image that is an image visible in a form associated with an object installation region that is a region in which an object is placed, among regions on a floor surface existing in the real space visually recognized by a user, and not displaying the corresponding image or displaying the corresponding image in a different display form for the object installation region in which a specific object is placed.

According to the first aspect of the present invention, it is possible to make it easier for the user to visually recognize an object as compared with a case where a corresponding image corresponding to a region is displayed in a form corresponding to the entire region in which the object is placed among the regions on the floor surface and a case where a display form of the corresponding image is not changed.

According to the second aspect of the present invention, for the object installation region in which the object designated by the user is placed, it is possible to prevent the corresponding image from being displayed or to display the corresponding image in a different display form.

According to the third aspect of the present invention, for the object installation region in which the object designated by the user is placed, it is possible to prevent the corresponding image from being displayed or to display the corresponding image in a different display form.

According to the fourth aspect of the present invention, for the object installation region in which the specific type of object is placed, it is possible to prevent the corresponding image from being displayed or to display the corresponding image in a different display form.

According to the fifth aspect of the present invention, for the object installation region in which the object matching the predetermined registered object is placed, it is possible to prevent the corresponding image from being displayed or to display the corresponding image in a different display form.

According to the sixth aspect of the present invention, for the object installation region in which the object to which the predetermined image is added is placed, it is possible to prevent the corresponding image from being displayed or to display the corresponding image in a different display form.

According to the seventh aspect of the present invention, for the object installation region in which the object that is a target of the work performed by the user is placed, it is possible to prevent the corresponding image from being displayed or to display the corresponding image in a different display form.

According to the eighth aspect of the present invention, in a case where a part of the specific object is moved, it is possible to display the partial corresponding image that is an image that is visible in a form associated with the part.

According to the ninth aspect of the present invention, in a case where the part of the specific object is the predetermined specific portion, it is possible to prevent the partial corresponding image from being displayed or display the partial corresponding image in a different display form.

According to the tenth aspect of the present invention, in a case where the part of the specific object is the portion that is the target of an operation performed by the user, it is possible to prevent the partial corresponding image from being displayed or display the partial corresponding image in the different display form.

According to the eleventh aspect of the present invention, it is possible to make it easier for the user to visually recognize an object as compared with a case where a corresponding image corresponding to a region is displayed in a form corresponding to the entire region in which the object is placed among the regions on the floor surface and a case where a display form of the corresponding image is not changed.

According to the twelfth aspect of the present invention, it is possible to make it easier for the user to visually recognize an object as compared with a case where a corresponding image corresponding to a region is displayed in a form corresponding to the entire region in which the object is placed among the regions on the floor surface and a case where a display form of the corresponding image is not changed.

According to the thirteenth aspect of the present invention, in a region of the object installation region that is designated by using the object corresponding image displayed by the display device based on the three-dimensional data, it is possible to prevent the corresponding image from being displayed or to display the corresponding image in a different display form.

According to the fourteenth aspect of the present invention, it is possible to make it easier for the user to visually recognize an object as compared with a case where a corresponding image corresponding to a region is displayed in a form corresponding to the entire region in which the object is placed among the regions on the floor surface and a case where a display form of the corresponding image is not changed.

### BRIEF DESCRIPTION OF THE DRAWINGS

Exemplary embodiment(s) of the present invention will be described in detail based on the following figures, wherein:
Fig. 1 is a diagram showing an overall configuration of an information processing system;
Fig. 2 is a diagram showing a configuration of a management server;
Fig. 3 is a diagram showing a hardware configuration of an individual device;
Fig. 4 is a diagram showing an example of a work target on which work is performed by an operator;
Fig. 5 is a diagram showing a screen displayed by a display device in a case where an operator standing at a location indicated by a reference symbol 3A in Fig. 4 looks in a direction indicated by an arrow 3B;
Fig. 6 is a diagram showing a work management database registered in an information storage unit;
Fig. 7 is a diagram showing an object corresponding image displayed within a field of view of an operator;
Fig. 8 is a diagram showing a screen displayed by a display device after a response is made by the operator;
Fig. 9 is a diagram showing another display example;
Fig. 10 is a diagram showing still another display example;
Fig. 11 is a diagram showing a display example in a case where a work unit is a predetermined specific work unit;
Figs. 12A and 12B are diagrams showing other display examples;
Fig. 13 is a diagram showing a state of display of the individual device in a case where an operator wearing an individual device, who is located at a location indicated by a reference symbol 3X in Fig. 4, looks at a next work location;
Fig. 14 is a diagram showing a display after the operator responds to a transition reception display;
Fig. 15 is a diagram showing still another display example;
Fig. 16 is a diagram showing another display example of a work position display image;
Fig. 17 is a diagram showing still another display example of a work position display image;
Fig. 18 is a diagram showing still another display example of a work position display image;
Fig. 19 is a diagram showing still another display example of a work position display image;
Figs. 20A and 20B are diagrams showing other display examples in the individual device;
Figs. 21A and 21B are diagrams showing other display forms;
Figs. 22A and 22B are diagrams showing still other display examples;
Figs. 23A and 23B are diagrams showing still other display examples;
Fig. 24 is a diagram showing still another display example;
Figs. 25A and 25B are diagrams showing other examples of changes in the display of the corresponding image;
Fig. 26 is a diagram showing an example of a flowchart showing a flow of processing of changing display;
Fig. 27 is a diagram showing an example of a flowchart showing a flow of processing of changing display;
Fig. 28 is a diagram showing an example of a flowchart showing a flow of processing of changing display;
Fig. 29 is a diagram showing a region corresponding image; and
Figs. 30A and 30B are diagrams showing a state after a part of an image forming apparatus is moved.

### DETAILED DESCRIPTION OF THE INVENTION

An exemplary embodiment of the present invention will be described below with reference to the accompanying drawings.

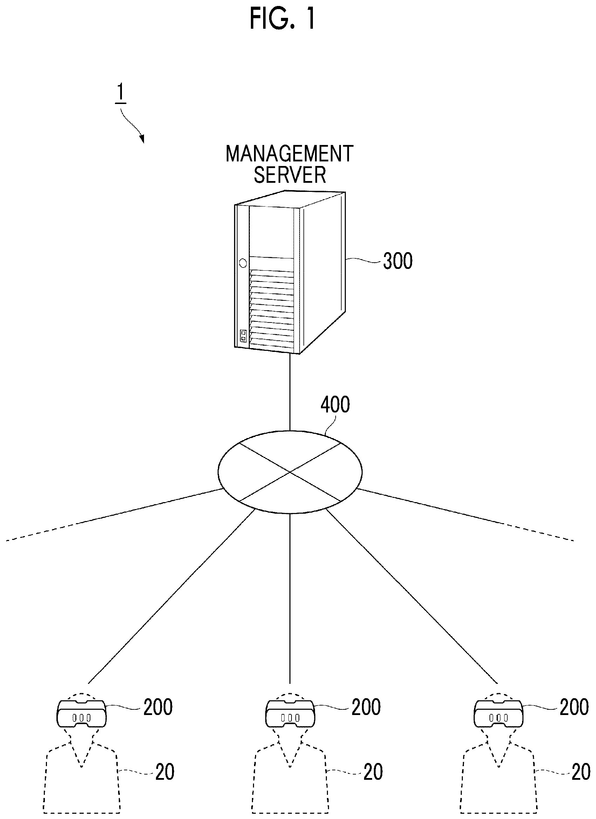

Fig. 1 is a diagram showing an overall configuration of an information processing system 1 according to the present exemplary embodiment.

The information processing system 1 is provided with a management server 300. Further, the information processing system 1 is provided with individual devices 200 prepared to correspond to each of operators 20. The individual device 200 is a glasses-type device and is worn on a head of the operator 20.

A plurality of individual devices 200 are provided according to the number of operators 20.

The individual device 200 displays an image within a field of view of the operator 20. Accordingly, the operator 20 visually recognizes the image. In addition, the operator 20 visually recognizes the surroundings of the operator 20 through the individual device 200.

Each of the individual devices 200 is connected to the management server 300 through a communication line 400. The communication line 400 may be a wired communication line or a wireless communication line.

### [Configuration of Management Server 300]

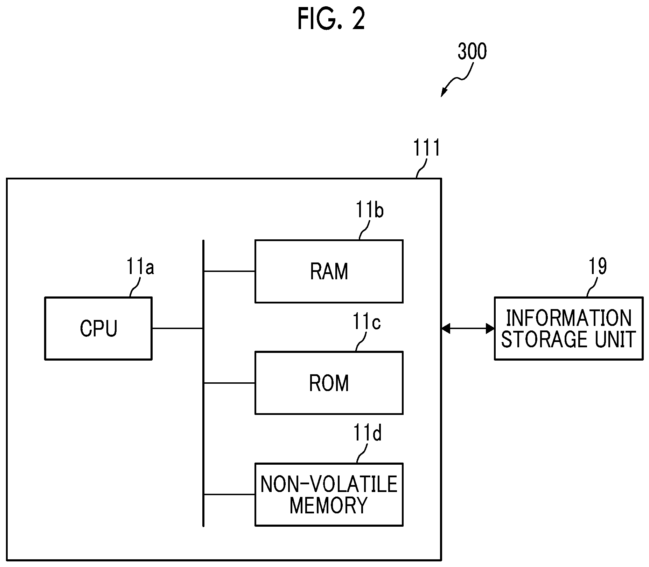

Fig. 2 is a diagram showing a configuration of the management server 300. The management server 300 is realized by a computer.

The management server 300 includes an arithmetic processing unit 111 that executes digital arithmetic processing according to a program, and an information storage unit 19 that stores information.

The information storage unit 19 is realized by an existing information storage device. The information storage unit 19 is configured by, for example, a hard disk drive (HDD), a semiconductor memory, a magnetic tape, or the like.

The arithmetic processing unit 111 is provided with a CPU 11a which is an example of a processor.

In addition, the arithmetic processing unit 111 is provided with a RAM 11b used as a work memory or the like of the CPU 11a and a ROM 11c in which programs or the like executed by the CPU 11a are stored.

Further, the arithmetic processing unit 111 is provided with a non-volatile memory 11d that is configured to be rewritable and can hold data even in a case where power supply is interrupted.

The non-volatile memory 11d is configured by, for example, an SRAM or a flash memory that is backed up by a battery. The information storage unit 19 stores various types of information such as a program executed by the arithmetic processing unit 111.

In the present exemplary embodiment, the CPU 11a provided in the arithmetic processing unit 111 reads the program stored in the ROM 11c or the information storage unit 19, and thus various types of processing performed by the management server 300 are executed.

The program executed by the CPU 11a can be provided to the management server 300 via a recording medium.

Examples of the recording medium include a magnetic recording medium such as a magnetic tape or a magnetic disk. Examples of the recording medium also include an optical recording medium such as an optical disc.

Examples of the recording medium also include a magneto-optical recording medium. Examples of the recording medium also include a semiconductor memory.

Further, the program to be executed by the CPU 11a may be provided to the management server 300 by using communication means such as the Internet.

### [Configuration of Individual Device]

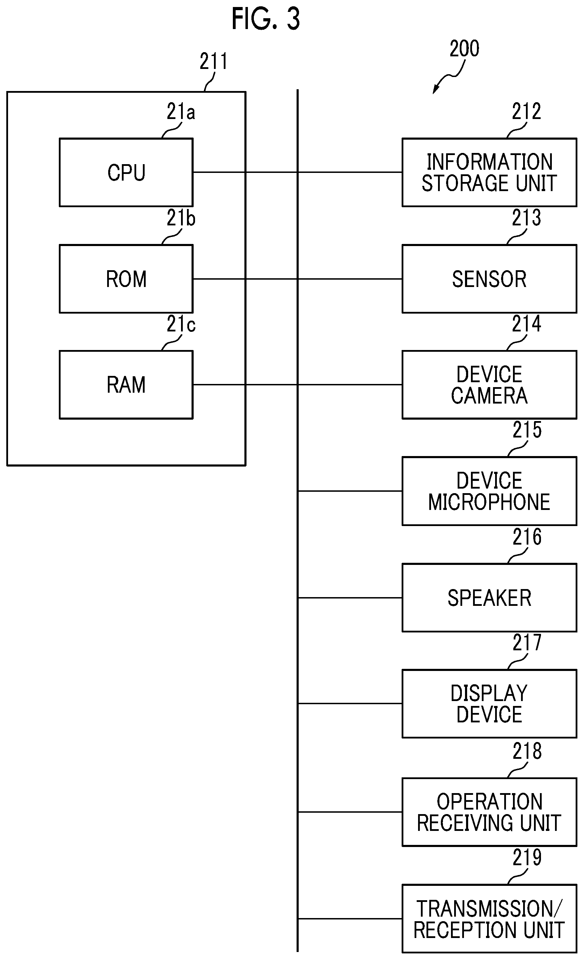

Fig. 3 is a diagram showing a hardware configuration of the individual device 200.

The individual device 200 includes a control device 211, an information storage unit 212, a sensor 213, a device camera 214, and a device microphone 215. The individual device 200 further includes a speaker 216, a display device 217, an operation receiving unit 218, and a transmission/reception unit 219.

The control device 211 is provided with a CPU 21a as an example of a processor.

In addition, the control device 211 is provided with a RAM 21c used as a work memory or the like of the CPU 21a, and a ROM 21b in which programs or the like executed by the CPU 21a are stored.

The information storage unit 212 is realized by an existing information storage device, such as a semiconductor memory.

Examples of the sensor 213 include a GPS sensor, a direction sensor, an acceleration sensor, and a gyro sensor. In addition, an example of the sensor 213 is light detection and ranging (LiDAR). In LiDAR, detection and distance measurement are performed using light.

In a case where the LiDAR is provided, a distance between the individual device 200 and a surrounding object located around the individual device 200 can be specified. In addition, in a case where the LiDAR is provided, a positional relationship between the individual device 200 and the surrounding object can be specified.

In the present exemplary embodiment, a current position of the individual device 200 or the orientation of the individual device 200 can be specified by referring to the output from the sensor 213. In addition, as described above, the distance between the individual device 200 and the surrounding object and the positional relationship between the individual device 200 and the surrounding object can be specified by referring to the output from the sensor 213.

The device camera 214 is a camera that images the surroundings of the individual device 200.

The device camera 214 faces a forward direction of the operator 20 in a state in which the individual device 200 is worn by the operator 20, and images the forward direction. In other words, the device camera 214 faces a direction where the operator 20 faces and images a front direction of the operator 20. The device camera 214 acquires a video within the field of view of the operator 20.

The device microphone 215 acquires a voice of the operator 20 to generate voice information.

The speaker 216 outputs sound or a voice and performs notification processing to the operator 20 to which the individual device 200 is worn.

The display device 217 is a so-called display and displays various types of information. **In** a state in which the individual device 200 is worn by the operator 20, the display device 217 is disposed in front of the operator 20.

**In** the present exemplary embodiment, the video obtained by the device camera 214 is displayed on the display device 217. **In** a state in which the individual device 200 is worn by the operator 20, the display device 217 displays a video showing a state in front of the operator 20.

**In** the present exemplary embodiment, the operator 20 visually recognizes the real space located in front of the operator 20 by referring to the video displayed on the display device 217.

The operation receiving unit 218 is a functional unit that receives an operation from a user. The operation receiving unit 218 is configured by, for example, a switch or a touch panel.

The transmission/reception unit 219 is a functional unit that transmits and receives a command and data to and from an external device connected to the individual device 200 via a communication line. An example of the external device is the management server 300 described above.

**In** addition, the individual device 200 may be a transmissive individual device 200.

**In** the transmissive individual device 200, a transparent display device 217 that allows the operator 20 to visually recognize the area behind the display device 217 is installed as the display device 217.

More specifically, in this case, a transparent display panel is installed in the display device 217. The operator 20 can visually recognize a situation behind the display panel through the display panel.

**In** this case, the operator 20 visually recognizes the area behind the display device 217 through the display device 217. **In** other words, the operator 20 visually recognizes the area in front of the operator 20 through the display device 217.

**In** the transmissive individual device 200, the operator 20 visually recognizes the real space that is visible through the display device 217 and is located behind the display device 217 and the image displayed on the display device 217.

The program executed by the CPU 21a can be provided to the individual device 200 via a recording medium.

Examples of the recording medium include a magnetic recording medium such as a magnetic tape or a magnetic disk. Examples of the recording medium also include an optical recording medium such as an optical disc.

Examples of the recording medium also include a magneto-optical recording medium. Examples of the recording medium also include a semiconductor memory.

**In** addition, the program executed by the CPU 21a may be provided to the individual device 200 by using the communication means such as the Internet.

The individual device 200 is not limited to the glasses-type individual device 200, and other examples thereof include a smartphone and a tablet terminal.

All of the glasses-type individual device 200, the smartphone, the tablet terminal, and the like are devices that can be carried by the operator 20.

Each of the smartphone and the tablet terminal is also provided with the display device 217 and the device camera 214. The operator 20 can visually recognize the area in front of the operator 20 by referring to the video that is captured by the device camera 214 and that is displayed on the display device 217.

**In** other words, in this case, the operator 20 can visually recognize a space that is located in front of the operator 20 and is located behind the smartphone or the tablet terminal by referring to the display device 217 that is provided in the smartphone or the tablet terminal disposed in front of the operator 20.

**In** the present exemplary embodiment, as will be described later, various types of information are notified to the operator 20 who is a user, via the individual device 200. The present invention is not limited to the glasses-type individual device 200, and such a notification can be performed even in a case where a smartphone or a tablet terminal is used.

**In** the present exemplary embodiment, it can be said that a display system is configured by the display device 217 provided in the individual device 200 and the control device 211 that controls the display device 217.

### [Description of Processing Executed by Individual Device]

**In** the following description, a case where the individual device 200 is worn by the operator 20 who performs work on a work target existing in the real space will be described as an example. **In** this case, an image displayed by the display device 217 appears within the field of view of the operator 20 who performs the work on the work target existing in the real space.

In the present exemplary embodiment, the display control on the display device 217 is performed by the CPU 21a provided in the control device 211 which is an example of a processor. As a result, the image appears within the field of view of the operator 20.

The display control on the display device 217 is not limited to the CPU 21a provided in the control device 211, and may be performed by, for example, the CPU 11a provided in the management server 300 shown in Fig. 2.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

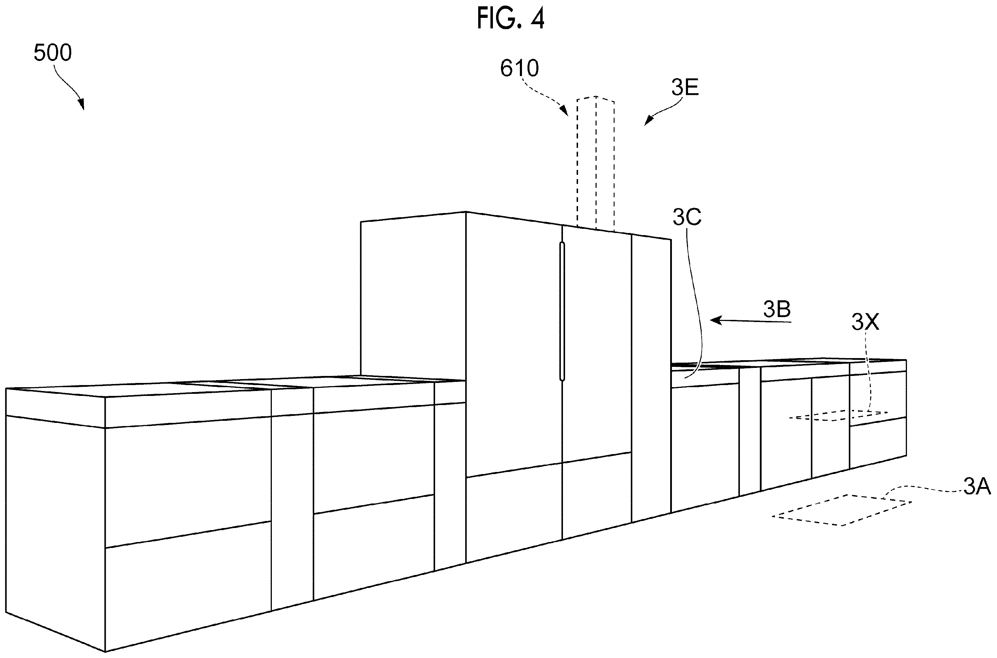

Fig. 4 is a diagram showing an example of a work target on which work is performed by the operator 20.

A work target 500 shown in Fig. 4 is an image forming apparatus that forms an image on a recording medium such as paper.

**In** the present exemplary embodiment, the operator 20 performs the work on the work target 500 in order in a state in which the individual device 200 is worn on the head of the operator 20.

**In** the following, a case where the work target 500 is an image forming apparatus will be described as an example, but the work target 500 is not particularly limited.

Examples of the work target 500 also include devices and apparatuses used in other industrial fields. For example, a device or an apparatus in the medical field, a transportation device, and the like are also examples of the work target 500. In addition, the work target 500 is not limited to a device or an apparatus, and examples thereof also include a structure that does not move, such as a bridge, a road, and a building.

In addition, the work target 500 is not limited to a finished product, and also includes a manufactured product that is to be assembled and manufactured.

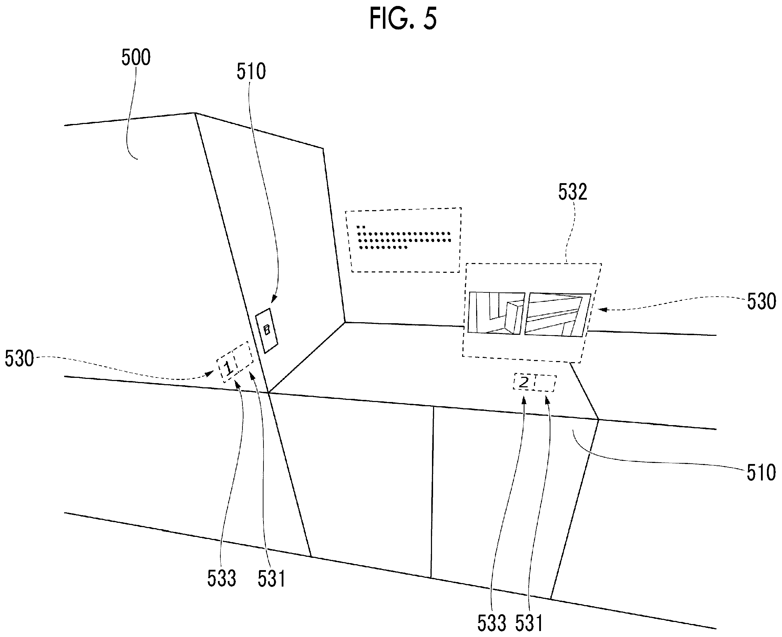

Fig. 5 is a diagram showing a screen displayed by the display device 217 in a case where the operator 20 standing at a location indicated by a reference symbol 3A in Fig. 4 looks in a direction indicated by an arrow 3B.

In each of the following drawings, images corresponding to objects existing in the real space among the images displayed by the display device 217 are displayed by solid lines.

**In** addition, in the image displayed by the display device 217, images corresponding to objects that do not exist in the real space are displayed with broken lines on an outer peripheral edge thereof.

In the actual display on the individual device 200, the outer peripheral edge is displayed with a solid line instead of a broken line.

In the present exemplary embodiment, images corresponding to objects that do not exist in the real space are displayed in an overlapping manner on the real space by using augmented reality (AR).

In the present exemplary embodiment, as shown in Fig. 5, a corresponding image 530 corresponding to a work location 510 is displayed in a form in association with the work location 510.

The "work location 510" refers to a location of the work target 500 where the work is performed by the operator 20.

The CPU 21a displays an end reception display 531 within the field of view of the operator 20 as one of the images constituting the corresponding image 530.

The "end reception display 531" is a display for receiving from the operator 20 that the work on the work location 510 is ended.

The CPU 21a causes the display device 217 to display the end reception display 531 such that the end reception display 531 is displayed within the field of view of the operator 20.

In addition, in the example shown in Fig. 5, a work content image 532, which is an image representing the work content, is displayed as the corresponding image 530. The work content image 532 may be a still image or a video.

Further, in the present exemplary embodiment, as will be described later, a transition reception display is displayed later as the corresponding image 530. The transition reception display will be described later.

The CPU 21a displays the end reception display 531 so that the end reception display 531 is visible in a form associated with the work location 510 visually recognized by the operator 20 via the individual device 200.

Accordingly, in the present exemplary embodiment, the end reception display 531 is displayed so that the end reception display 531 is visible in a form located near the work location 510.

The end reception display 531 is a rectangular image having a frame shape. In other words, the end reception display 531 is a so-called check box.

In the example shown in Fig. 5, a plurality of work locations 510 are present.

In this display example, the CPU 21a displays the end reception display 531 in a form associated with each of the work locations 510.

In other words, the CPU 21a displays the end reception display 531 so that the end reception display 531 is visible in a form associated with each of the work locations 510.

Further, in this example, the CPU 21a displays information 533 related to the order of the work. In the following, in the present specification, the information related to the order of the work will be referred to as "work order information 533". In the present exemplary embodiment, an image indicating the work order information 533 is displayed as an image constituting another part of the corresponding image 530.

The CPU 21a displays the work order information 533 in a form associated with each of the work locations 510.

In other words, the CPU 21a displays the work order information 533 so that the work order information 533 is visible in a form associated with each of the work locations 510.

In the present exemplary embodiment, an image indicating a number such as "1" or "2" is displayed as the work order information 533.

The work order information 533 is not limited to numbers. For example, an image representing text such as "before" or "after" may be displayed.

As in the present exemplary embodiment, in a case where the work order information 533 is displayed, it is difficult for each work to be performed in an incorrect order.

In the present exemplary embodiment, as described above, the image visually recognized by the operator 20 is displayed in a form associated with a predetermined location such as the work location 510 of the work target 500.

Further, in the present exemplary embodiment, the corresponding image 530 is displayed with respect to the work location 510 that is a target of the most recent work. On the other hand, the corresponding image 530 is not displayed with respect to the work location 510 where the work has already been completed and the work location 510 that is procedurally prior.

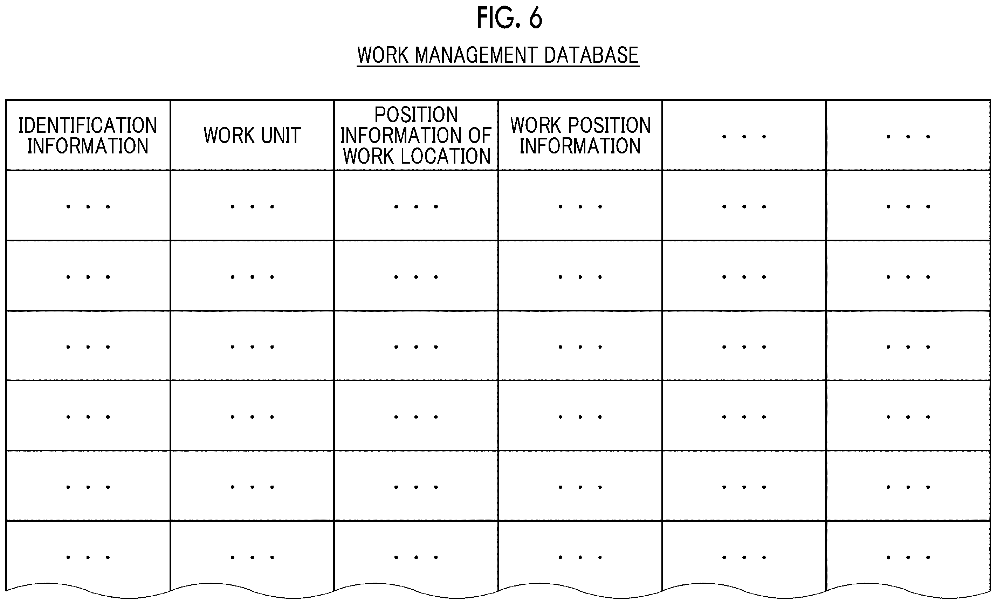

Fig. 6 is a diagram showing a work management database registered in the information storage unit 212.

In the present exemplary embodiment, the work management database shown in Fig. 6 is registered in the information storage unit 212 shown in Fig. 3.

In the present exemplary embodiment, each time one work by the operator 20 is ended or each time the work of one work unit by the operator 20 is ended, the CPU 21a refers to the work management database and specifies the next work or the next work unit.

In the work management database, information on the work that the operator 20 is to perform in sequence is arranged in order from the top, in the order in which the work is to be performed.

In the work management database, identification information for identifying each work is registered for each work. This identification information consists of, for example, sequential numbers.

Further, in the work management database, the positional information of the work location 510 is registered for each work. Specifically, the position coordinates indicating which part of the work target 500 the work location 510 is located in are registered.

In the present exemplary embodiment, a specific location of the image forming apparatus, which is the work target 500, is set as the origin, and three-dimensional position coordinates with the specific location as the origin are registered as the positional information of the work location 510.

Further, information on a work unit to which each work belongs is registered for each work in the work management database.

In the present exemplary embodiment, as will be described later, in a case where work included in the work unit is only one or the like, the display of the end reception display 531 may be omitted.

Further, in the work management database, work position information, which is information on a place where the operator 20 is located in a case of performing the work, is registered for each work.

The work position information is also three-dimensional position coordinates with a specific location of the image forming apparatus, which is the work target 500, as the origin.

Further, although not shown, in the work management database, information on a member to be a target of the work is registered for each work. Specifically, information such as positional information of the member, coordinate values indicating positions of each part of the member, and movable range of the member is registered as the information on the member.

Although not shown, in the present exemplary embodiment, for example, a seal on which a two-dimensional code is printed is attached to an outer surface of the work target 500 existing in the real space.

The two-dimensional code is a recognition image, which is an image used in a case where the individual device 200 recognizes the presence of the work target 500.

The individual device 200 specifies the image forming apparatus which is the work target 500 based on the recognition image shown in the video obtained by the device camera 214 shown in Fig. 3.

The recognition images are attached to, for example, three locations of the work target 500. The recognition images are attached to the work target 500 in a state of being shifted from each other.

The CPU 21a of the individual device 200 specifies the positional relationship between the individual device 200 and the work target 500, based on the three recognition images shown in the video obtained by the device camera 214.

The CPU 21a of the individual device 200 recognizes the three recognition images to specify which of the device coordinate systems, which are the three-dimensional coordinate systems of the individual device 200, the work target 500 is located in.

**In** addition, in the information storage unit 212 of the individual device 200, the three-dimensional data of the image forming apparatus, which is the work target 500 existing in the real space, is registered in advance.

The CPU 21a of the individual device 200 specifies which of the device coordinate systems each of the parts of the image forming apparatus, which is the work target 500, is located in, based on the three recognition images shown in the video obtained by the device camera 214 and the three-dimensional data of the image forming apparatus.

In the above description, a case where the individual device 200 recognizes the position of the work target 500 using the recognition image attached to the work target 500 has been described as an example.

However, a method of causing the individual device 200 to recognize the position of the work target 500 is not limited thereto.

For example, the operator 20 may perform an operation of making the object corresponding image displayed within the field of view of the operator 20 visible in an overlapping manner on the work target 500 existing in the real space, so that the individual device 200 recognizes the position of the work target 500.

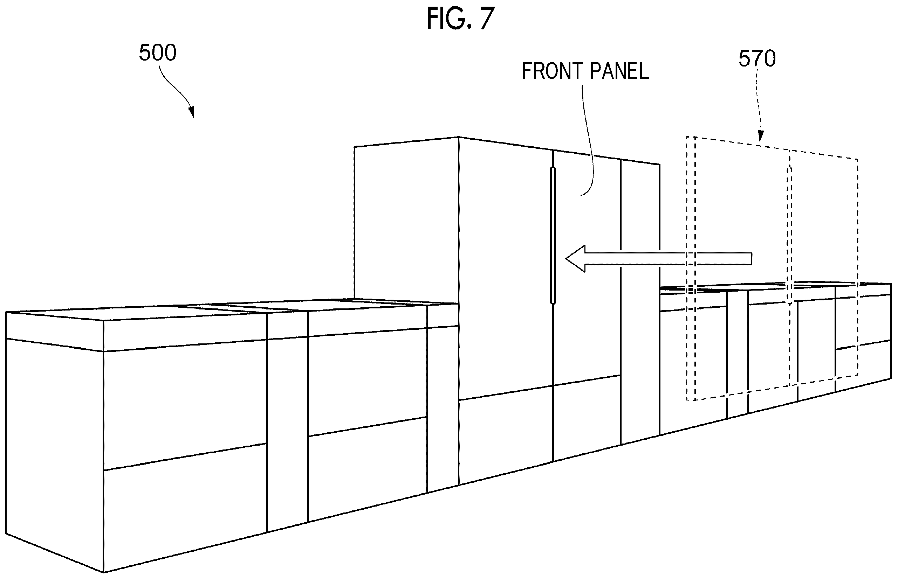

Fig. 7 is a diagram showing an object corresponding image 570 displayed within the field of view of the operator 20.

The object corresponding image 570 is displayed within the field of view of the operator 20 by the display device 217 shown in Fig. 3.

The operator 20 performs an operation of making the object corresponding image 570 appearing within the field of view of the operator 20 visible in an overlapping manner on the work target 500 existing in the real space.

The operator 20 performs an operation by moving the operator's head or by manually moving the object corresponding image 570, which appears to float in the air, so that the object corresponding image 570 is visible in an overlapping manner on the work target 500.

**In** a case where the object corresponding image 570 is an image representing the entire work target 500, the operator 20 performs an operation of making the entire object corresponding image 570 overlap the entire work target 500.

**In** addition, in a case where the object corresponding image 570 is an image of a part of components that constitutes the work target 500, the operator 20 performs an operation of making the image of the part of the components visible in an overlapping manner on the part of the components existing in the real space.

In Fig. 7, the object corresponding image 570 is an image corresponding to a front panel that constitutes a part of the image forming apparatus. In this case, the operator 20 performs an operation of making the object corresponding image 570 visible in an overlapping manner on the front panel existing in the real space.

Then, in a case where the object corresponding image 570 is visible in an overlapping manner on the work target 500, the operator 20 performs the confirmation processing by operating the decision button or the like.

As a result, in this case as well, the CPU 21a of the individual device 200 can specify which of the device coordinate systems, which are the coordinate systems of the individual device 200, each part of the work target 500 is located in.

Thereafter, the individual device 200 is moved or the posture of the individual device 200 is changed. In this case, the CPU 21a corrects the information on the position of each unit obtained in the confirmation processing described above to obtain the latest information on the position of each unit.

Specifically, the CPU 21a of the individual device 200 corrects the information on the position of each unit based on the amount of movement of the individual device 200 and the amount of change of the posture of the individual device 200 to obtain the latest information on the position of each unit.

In a case where the processing described above is performed using the object corresponding image 570, the object corresponding image 570, which is an image representing the object and is generated based on the three-dimensional data, is displayed in the field of view of the operator 20 by the display device 217.

As described above, examples of the object corresponding image 570 include an image representing the entire work target 500 and an image representing a part of components that constitutes the work target 500.

In the present specification, the "three-dimensional data" refers to data having a coordinate value in an X direction, such as a width direction, a coordinate value in a Y direction, such as a depth direction, and a coordinate value in a Z direction, such as a height direction. In other words, the three-dimensional data refers to data consisting of three components.

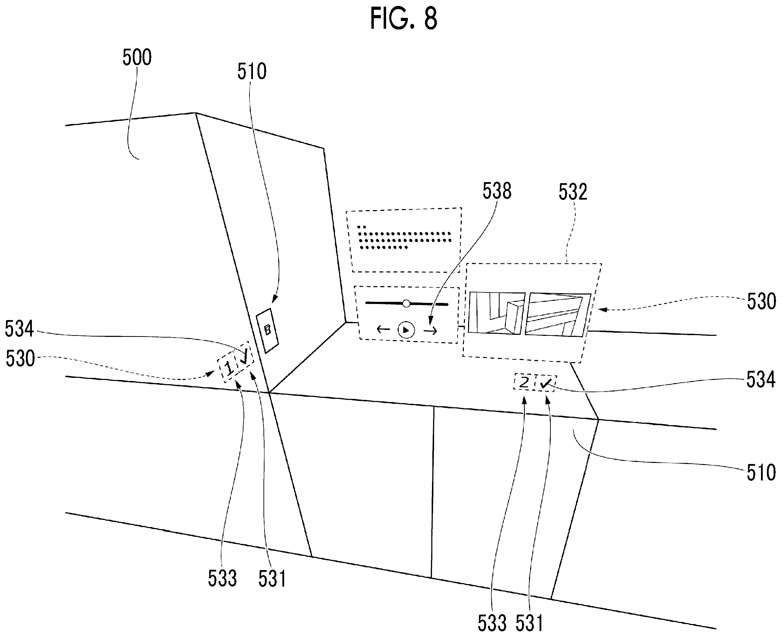

Fig. 8 is a diagram showing a screen displayed by the display device 217 after a response is made by the operator 20.

In a case where there is a response of the operator 20 to the end reception display 531, the CPU 21a displays an end corresponding image 534 as shown in Fig. 8.

The "end corresponding image 534" is an image indicating that the work on the work location 510 is ended.

The CPU 21a displays the end corresponding image 534 in a form in which the end corresponding image 534 is associated with the end reception display 531.

The shape of the end corresponding image 534 is not particularly limited, and text information such as "completion" may be displayed as the end corresponding image 534.

In Fig. 8, the end corresponding image 534 is displayed for both of the two work locations 510, and the work is in an ended state for both of the two work locations 510.

In the present exemplary embodiment, the operation corresponding to "1" is an operation of turning off the power. In addition, the operation corresponding to "2" is an operation of opening and closing an opening/closing cover.

In the actual work, the operator 20 specifies the work order with reference to the work order information 533. Then, the operator 20 sequentially performs the work on each of the work locations 510.

In this example, the operator 20 first performs the work on the work location 510 that is displayed in association with "1". Then, in a case where the operator 20 ends the work on the work location 510, the operator 20 responds to the end reception display 531 that is displayed in association with "1".

Accordingly, the end corresponding image 534 is displayed in a form associated with the end reception display 531.

Next, the operator 20 performs the work on the work location 510 that is displayed in association with "2". Then, in a case where the operator 20 ends the work on the work location 510, the operator 20 responds to the end reception display 531 that is displayed in association with "2".

Accordingly, in this case as well, the end corresponding image 534 is displayed in a form associated with the end reception display 531.

As described above, the end corresponding image 534 is displayed in a form that the end corresponding image 534 is associated with each of the end reception displays 531.

In responding to the end reception display 531, the operator 20 makes a response by, for example, performing an operation on the operation receiving unit 218 of the individual device 200 shown in Fig. 3.

In addition, the operator 20 performs an operation on a dedicated device (not shown) for responding, which is provided separately from the individual device 200, to make a response.

In addition, the operator 20 selects the end reception display 531 that appears to float in the air with the operator's hand and makes a response.

In this case, the CPU 21a specifies that the operator 20 has responded to the end reception display 531, based on the position and the movement of the hand appearing in the video obtained by the device camera 214 shown in Fig. 3.

In addition, the operator 20 visually recognizes the end reception display 531 that appears to float in the air, for example, to make a response. In this case, a destination of the visual line of the operator 20 is detected and the end reception display 531 visually recognized by the operator 20 is specified. The detection of the destination of the visual line of the operator 20 may be performed by using a known technique.

In addition, the operator 20 responds to the end reception display 531 with the operator's own voice. In this case, the voice of the operator 20 is acquired using the device microphone 215 shown in Fig. 3.

In this case, for example, in a case where the operator 20 utters "the work of No. 1 is ended", the CPU 21a determines that there is a response to the end reception display 531 to which the work order information 533 of "1" is associated.

In addition, for example, in a case where the operator 20 utters "the work of No. 2 is ended", the CPU 21a determines that there is a response to the end reception display 531 to which the work order information 533 of "2" is associated.

In displaying a plurality of end reception displays 531, all the end reception displays 531 may not be displayed from the beginning.

In displaying the plurality of end reception displays 531, the plurality of end reception displays 531 may be displayed in sequence.

In this case, for example, the CPU 21a first displays only the first end reception display 531.

Then, in a case where there is a response of the operator 20 to the first end reception display 531, the CPU 21a displays the second end reception display 531 corresponding to the next work location 510.

Fig. 8 shows a state of a display screen after all the responses to the end reception display 531 are made.

In a case where there is a response from the operator 20 to all the end reception displays 531, the CPU 21a further displays a transition reception display 538 as another image example that constitutes the corresponding image 530 as shown in Fig. 8.

Before all the responses to the end reception display 531 are made, the transition reception display 538 is not displayed as shown in Fig. 5. In other words, the operator 20 is in a state in which the operator 20 cannot respond to the transition reception display 538.

In the present exemplary embodiment, in a case where there is a response from the operator 20 for both of the two displayed end reception displays 531, as shown in Fig. 8, the transition reception display 538 is displayed. As a result, the operator 20 is in a state in which the operator 20 can respond to the transition reception display 538.

The "transition reception display 538" is a display for receiving an indication of a transition to work on the next work location 510 from the operator 20.

In the present exemplary embodiment, in a case where there is a response of the operator 20 to the transition reception display 538, a new corresponding image 530 is displayed at the next work location 510.

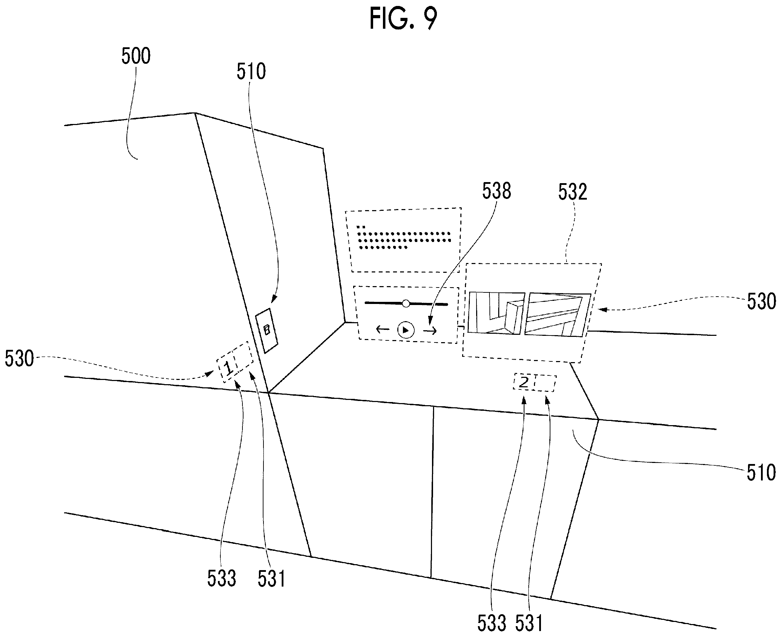

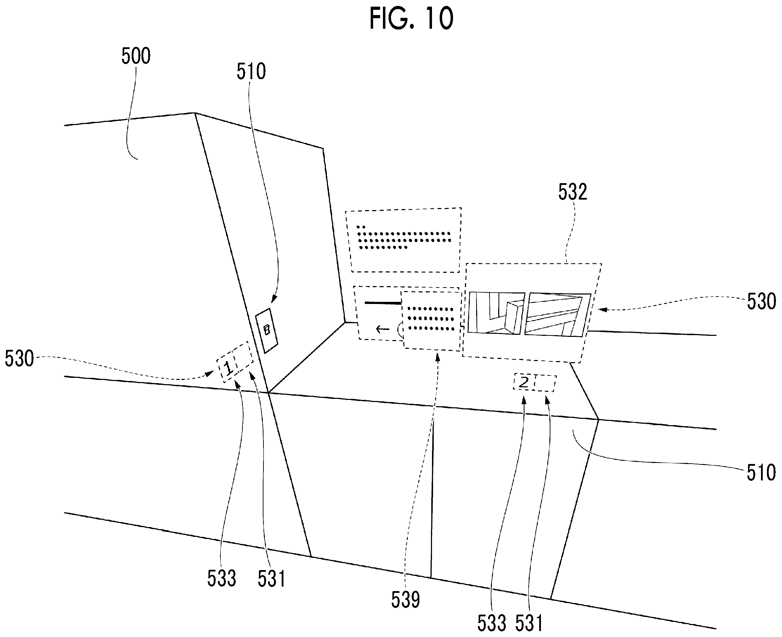

Figs. 9 and 10 are diagrams showing other display examples.

Here, as shown in Fig. 9, a case where the transition reception display 538 is displayed from the beginning will be described.

In this processing example, regardless of the presence or absence of the response from the operator 20 to the end reception display 531, the transition reception display 538 is displayed together with the end reception display 531.

Here, in this processing example, a situation may occur in which the operator 20 responds to the transition reception display 538 in a state in which the operator 20 has not yet responded to the end reception display 531.

In this case, in this processing example, as shown in Fig. 10, a predetermined notification 539 is given to the operator 20 via the individual device 200.

Specifically, in this case, the CPU 21a causes the operator 20 to receive, as the notification 539, a notification indicating that there is no response and/or a notification indicating that the work on the work location 510 is not yet ended, via the individual device 200.

The "notification indicating that there is no response" refers to a notification indicating that there is no response to the end reception display 531 yet.

In a case where this notification is made, for example, a wording such as "there is no response to the end reception display 531" is displayed by the display device 217.

In addition, the CPU 21a causes the operator 20 to receive the notification indicating that the work on the work location 510 is not yet ended. In this case as well, the notification is given through the individual device 200.

Specifically, in this case, the CPU 21a causes the display device 217 to display, for example, a wording such as "work on the work location 510 is not ended".

Only one of the notification indicating that there is no response and the notification indicating that the work on the work location 510 is not yet ended may be given, or both may be given.

As described above, it is also assumed that the operator 20 performs the operation on the transition reception display 538 without responding to the end reception display 531. In other words, it is also assumed that the operator 20 performs an operation on the transition reception display 538 in a state in which the work on the work location 510 is not performed.

In this case, in the above example, the notification indicating that there is no response and/or the notification indicating that the work on the work location 510 is not yet ended are given to the operator 20 via the individual device 200.

The notification is not limited to being given via the display device 217, and may be given via the speaker 216.

In the processing example, in a case where the operation is performed on the transition reception display 538 in a state in which the response to the end reception display 531 is not made, the processing of displaying the corresponding image 530 corresponding to the next work location 510 is not executed.

In the present exemplary embodiment, in a case where there is a response to all the end reception displays 531 and in a case where there is a response of the operator 20 to the transition reception display 538, the corresponding image 530 is displayed in a form associated with the next work location 510.

In addition, it is also assumed that there is a response to another end reception display 531 displayed corresponding to another work location 510 in a state where there is no response to a predetermined specific end reception display 531.

In this case, the CPU 21a may not display the end corresponding image 534 corresponding to the other end reception display 531.

Here, examples of the "predetermined specific end reception display 531" include the end reception display 531 associated with "1" described above.

In addition, examples of "another end reception display 531 displayed corresponding to another work location 510" include the end reception display 531 associated with "2" described above.

It is assumed that there is a response to the end reception display 531 associated with "2" in a state in which there is no response to the end reception display 531 associated with "1". In this case, the end corresponding image 534 corresponding to the end reception display 531 associated with the "2" may not be displayed.

In addition, in this case, the predetermined notification may be given to the operator 20. Specifically, for example, information indicating that the work to be performed first is not ended may be notified to the operator 20 via the individual device 200.

This notification may be given via the display device 217 or may be given via the speaker 216, as described above.

In a case where this processing is performed, it is easy for the operator 20 to notice that the order of the operator's work is incorrect.

### [Display of Transition Reception Display for Each Work Unit]

In the present exemplary embodiment, as described above, the transition reception display 538, which is a display for receiving, from the operator 20, an indication of a transition to the work on the next work location 510, is displayed.

In this display, the CPU 21a may display the transition reception display 538 for each predetermined work unit.

Fig. 9 shows a case where one transition reception display 538 is displayed corresponding to one work unit.

Fig. 9 shows a situation in which work of one work unit including the work associated with "1" and the work associated with "2" is performed.

In the example shown in Fig. 9, the CPU 21a does not display the transition reception display 538 for each work location 510.

In the example shown in Fig. 9, the CPU 21a displays one transition reception display 538 corresponding to both of the work location 510 associated with "1" and the work location 510 associated with "2".

In the example shown in Fig. 9, the end reception display 531 is displayed in a form corresponding to each of the work locations 510.

On the other hand, the transition reception display 538 is not displayed in a form corresponding to each of the work locations 510, and is displayed in a form corresponding to one work unit.

It is not excluded that the transition reception display 538 is displayed in a form corresponding to each of the work locations 510. The transition reception display 538 may be displayed in a form corresponding to each of the work locations 510.

### [Non-Display of End Reception Display]

In addition, in a case where the work unit is a predetermined specific work unit, the CPU 21a may not display the end reception display 531.

In other words, in a case where the work unit is a predetermined specific work unit, the CPU 21a may not display the end reception display 531 corresponding to the work location 510 where the work included in the work unit is performed.

Here, examples of the "predetermined specific work unit" include a work unit in which the number of work locations 510 at which the work included in the work unit is performed is smaller than a predetermined threshold value.

More specifically, examples of the "predetermined specific work unit" include a work unit in which the number of work locations 510 at which the work is performed is smaller than 2. In other words, examples of the "predetermined specific work unit" include a work unit in which the number of work locations 510 at which the work is performed is 1.

In a case where the number of work locations 510 at which the work included in the work unit is performed is smaller than a predetermined threshold value, the CPU 21a may not display the end reception display 531 corresponding to the work unit.

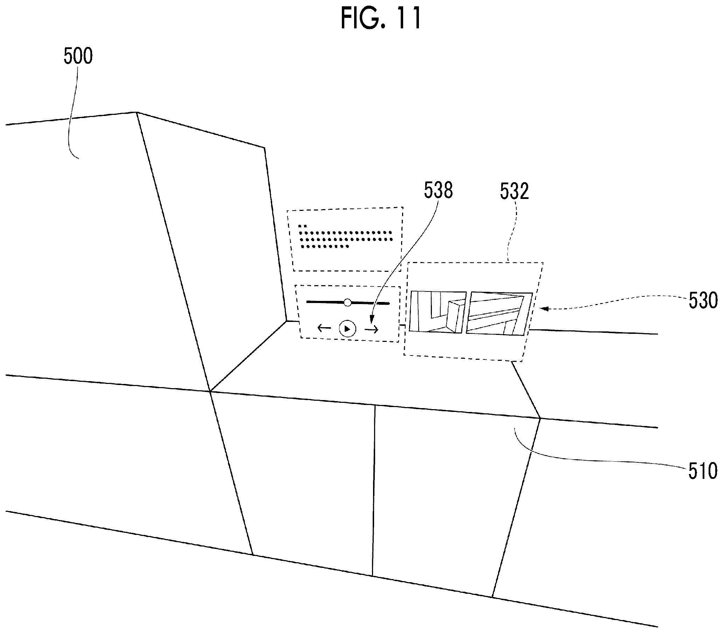

Fig. 11 is a diagram showing a display example in a case where a work unit is a predetermined specific work unit.

Here, the work location 510 is one.

In this display example, the end reception display 531 is not displayed. On the other hand, in this display example, the transition reception display 538 is displayed.

In this display example, in a case where the operator 20 ends the work on the work location 510, the operator 20 performs an operation on the transition reception display 538.

In this case, a response to the transition reception display 538 is imposed on the operator 20. In this case, by imposing this response on the operator 20, the probability of forgetting the work on the work location 510 is reduced.

In this case, the operator 20 does not have to perform the operation for both of the end reception display 531 and the transition reception display 538. In this case, a work burden on the operator 20 is reduced.

In a case where only the transition reception display 538 is displayed without displaying the end reception display 531, the transition reception display 538 is displayed in a stage where the work unit to be displayed by the transition reception display 538 is a target of the work by the operator 20.

In **a** case where the work unit is the above-described specific work unit, the CPU 21a displays the transition reception display 538 corresponding to the work unit in a stage where the work included in the work unit is a target of the work by the operator 20.

In this case, the transition reception display 538 is displayed from the beginning instead of displaying the transition reception display 538 on a condition that the response to the end reception display 531 is present.

In the processing example shown in Fig. 8, the transition reception display 538 is displayed on a condition that the operator 20 has responded to the end reception display 531.

In addition, in the processing examples shown in Figs. 9 and 10, after the operator 20 responds to the end reception display 531, the operator 20 can perform an operation on the transition reception display 538.

Without being limited to this, in a case where the work unit is the above-described predetermined specific work unit, the transition reception display 538 corresponding to the work unit may be displayed in an operable state from the beginning.

The transition reception display 538 corresponding to the specific work unit may be displayed in an operable state in a stage where the work included in the specific work unit is a target of the work by the operator 20.

In addition, even before the operator 20 responds to the end reception display 531, the operator 20 may be able to respond to the transition reception display 538.

For example, it is assumed that the operator 20 may wish to skip the work on a certain specific work location 510 and move to the work on the next work location 510.

Even before the operator 20 responds to the end reception display 531, in a case where the operation for the transition reception display 538 can be performed, the skip can be performed.

### [Inclination of Corresponding Image]

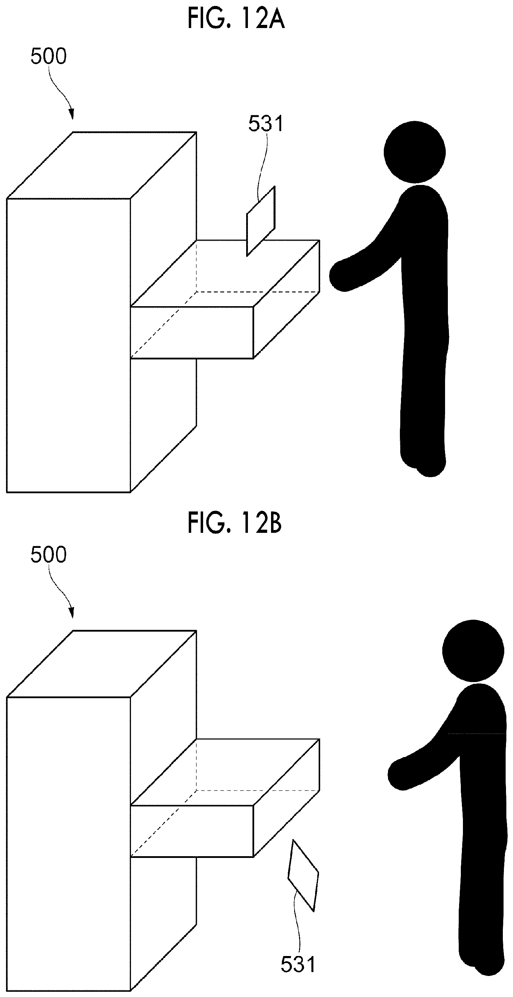

Figs. 12A and 12B are diagrams showing other display examples.

As shown in Figs. 12A and 12B, the CPU 21a may change the inclination of the end reception display 531 displayed in association with the work location 510 according to a position of the work location 510 in the work target 500.

In other words, as shown in Figs. 12A and 12B, the CPU 21a may change the inclination of the end reception display 531 according to a display position of the end reception display 531.

In Fig. 12A, a case where the work location 510 is located in the middle stage of the work target 500 is shown. In other words, in Fig. 12A, a case where the display position of the end reception display 531 is located in the middle stage of the work target 500 is shown.

In Fig. 12B, a case where the work location 510 is located below the work target 500 is shown. In other words, in Fig. 12B, a case where the display position of the end reception display 531 is located below the work target 500 is shown.

As shown in Figs. 12A and 12B, the CPU 21a may change the inclination of the end reception display 531. Accordingly, it is easy for the operator 20 to visually recognize the end reception display 531 and to respond to the end reception display 531.

In Fig. 12B, the inclination of the end reception display 531 with respect to a vertical direction is larger than that in Fig. 12A.

In the state of Fig. 12B, it is easier to visually recognize the end reception display 531 and to respond to the end reception display 531 than in a case where the inclination of the end reception display 531 is small.

In addition, the CPU 21a may change the inclination of the end reception display 531 displayed in association with the work location 510 according to the positional relationship between the operator 20 and the work location 510.

In this case, the inclination of the end reception display 531 is changed in response to the operator 20 crouching or standing. In addition, in this case, even in a case where the operator 20 moves in a lateral direction, the inclination of the end reception display 531 is changed.

The CPU 21a changes the inclination of the end reception display 531 such that the end reception display 531 faces a side on which the operator 20 who performs the movement or changes the posture is located.

The CPU 21a specifies a position and a posture of the individual device 200 with respect to the work target 500 based on the above-described recognition image shown in the video obtained by the device camera 214, for example.

Then, the CPU 21a corrects the inclination of the end reception display 531, which is set in advance, based on the specified position and posture.

As a result, the inclination of the end reception display 531 is changed according to the positional relationship between the operator 20 and the work location 510.

In this case, it is easier for the operator 20 to visually recognize the end reception display 531 and to respond to the end reception display 531 as compared with a case where the inclination of the end reception display 531 is not changed.

In the above description, a case where the inclination of the end reception display 531 is changed has been described, but the inclination of other images constituting the corresponding image 530 may also be changed in the same manner.

Specifically, the inclination of the transition reception display 538, the work content image 532, and the image representing the work order information 533 such as "1" or "2" may be changed for in the same manner as described above.

That is, the inclination of the transition reception display 538, the work content image 532, and the image representing the work order information 533 may be changed according to the display position.

In addition, the inclination of the transition reception display 538, the work content image 532, and the image representing the work order information 533 may also be changed according to the positional relationship between the operator 20 and the work location 510.

### [Movement of Transition Reception Display]

The transition reception display 538 will be further described.

In the present exemplary embodiment, as described above, the transition reception display 538 is displayed as a part of the corresponding image 530 displayed in a form associated with the work location 510.

As described above, the transition reception display 538 is a display for receiving, from the operator 20, the transition to the next work.

The CPU 21a displays the transition reception display 538 in a state of being associated with the image forming apparatus that is the work target 500 visually recognized by the operator 20.

In addition, the CPU 21a displays the transition reception display 538 such that the transition reception display 538 is visible in a form associated with the work target 500.

Further, the CPU 21a changes the display position of the transition reception display 538 with respect to the work target 500.

In a case where a response from the operator 20 to the transition reception display 538 is present, the CPU 21a changes the display position of the transition reception display 538.

In the present exemplary embodiment, in a case where a response from the operator 20 to the transition reception display 538 is present, the corresponding image 530 moves to the next work location 510.

The corresponding image 530 includes the transition reception display 538, and in a case where a response from the operator 20 to the transition reception display 538 is present, the display position of the transition reception display 538 included in the corresponding image 530 is changed.

Here, the "corresponding image 530 is moved to the next work location 510" refers to a display form in which the corresponding image 530 appears to move to the next work location 510.

As described above, the corresponding image 530 includes the transition reception display 538. In the present exemplary embodiment, in a case where a response from the operator 20 to the transition reception display 538 is present, the corresponding image 530 including the transition reception display 538 is moved to the next work location 510.

Here, a case where the operator 20 responds to the transition reception display 538 displayed in association with one work location 510 is assumed.

**In** this case, the CPU 21a displays the transition reception display 538 such that the transition reception display 538 is visible in a form associated with the work location 510 of the next work.

**In** addition, here, a case where the operator 20 responds to the transition reception display 538 displayed in association with one work unit is assumed.

**In** this case, the CPU 21a displays the transition reception display 538 such that the transition reception display 538 is visible in a form associated with the next work unit.

In the present exemplary embodiment, a rear surface side of a portion indicated by the reference symbol 3C in Fig. 4 is the work location 510 of the next work.

In a case where a response of the operator 20 to the transition reception display 538 shown in Fig. 8 or the like is present, the CPU 21a displays the transition reception display 538 in a form associated with the work location 510 of the next work.

In this case, the transition reception display 538 is displayed such that the transition reception display 538 is visible in a form associated with the work location 510 of the next work.

In the present exemplary embodiment, in a case where a response of the operator 20 to the transition reception display 538 shown in Fig. 8 or the like is present, a work position display image 610 corresponding to the work location 510 of the next work is displayed as indicated by the reference symbol 3E in Fig. 4.

The work position display image 610 as an example of a position display image is an image showing a work position in a case where the operator 20 performs work.

Details of the work position display image 610 will be described later.

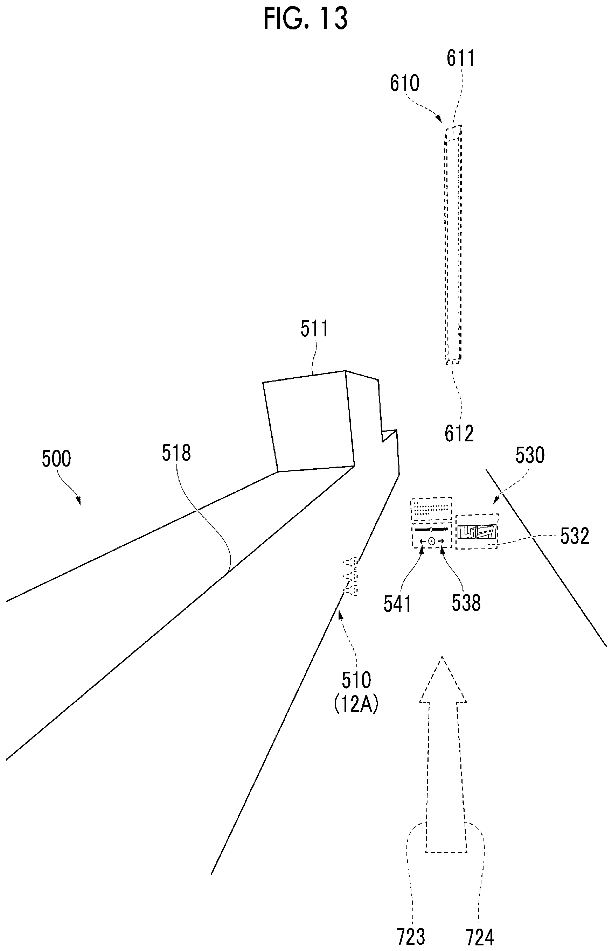

Fig. 13 is a diagram showing a state of display of the individual device 200 in a case where the operator 20 wearing the individual device 200, who is located at a location indicated by a reference symbol 3X in Fig. 4, looks at the next work location 510.

The location indicated by the reference symbol 3X in Fig. 4 is a location located on a rear surface side of the work target 500.

In Fig. 13, a location indicated by a reference symbol 12A is the next work location 510.

In the present exemplary embodiment, in a case where the operator 20 performs an operation on the previous transition reception display 538 shown in Fig. 8 or the like, as shown in Fig. 13, the corresponding image 530 is displayed in a form associated with the next work location 510.

The corresponding image 530 includes a newly displayed transition reception display 538. In addition, the corresponding image 530 includes a newly displayed work content image 532.

In addition, although not shown, the end reception display 531 is displayed near the next work location 510 shown in Fig. 13.

In the example shown in Fig. 13, even in a case where a response from the operator 20 to the end reception display 531 is absent, the operator 20 can perform an operation on the transition reception display 538.

Here, a case where the display position of the transition reception display 538 is not changed is considered. In other words, a case where the transition reception display 538 is displayed in a fixed state at one location is considered.

In this case, the operator 20 needs to return to the transition reception display 538 displayed in a fixed state each time the work on the work location 510 is ended.

On the other hand, in the present exemplary embodiment, the operator 20 does not need to return to the display position of the transition reception display 538.

Although the description has been omitted above, in the present exemplary embodiment, as shown in Fig. 13, a back button 541 is also displayed in addition to the transition reception display 538. In a case where the operator 20 selects the back button 541, the corresponding image 530 is displayed in the previous work location 510.

The transition reception display 538 included in the corresponding image 530 is displayed in a form associated with the work location 510 that is a target of the work to be performed by the operator 20.

In a case where the transition reception display 538 is displayed for each work unit including a plurality of pieces of work, the transition reception display 538 is displayed for each work unit and is displayed in a form associated with the work unit.

### [Display in Location where Reception Display is Displayed]

In the present exemplary embodiment, in a case where a response from the operator 20 to the transition reception display 538 is present, the CPU 21a deletes the transition reception display 538 that has been displayed before the response is provided.

In addition, in a case where the response from the operator 20 to the transition reception display 538 is present, the CPU 21a performs display different from the transition reception display 538 in a location where the transition reception display 538 displayed before the response is provided is displayed.

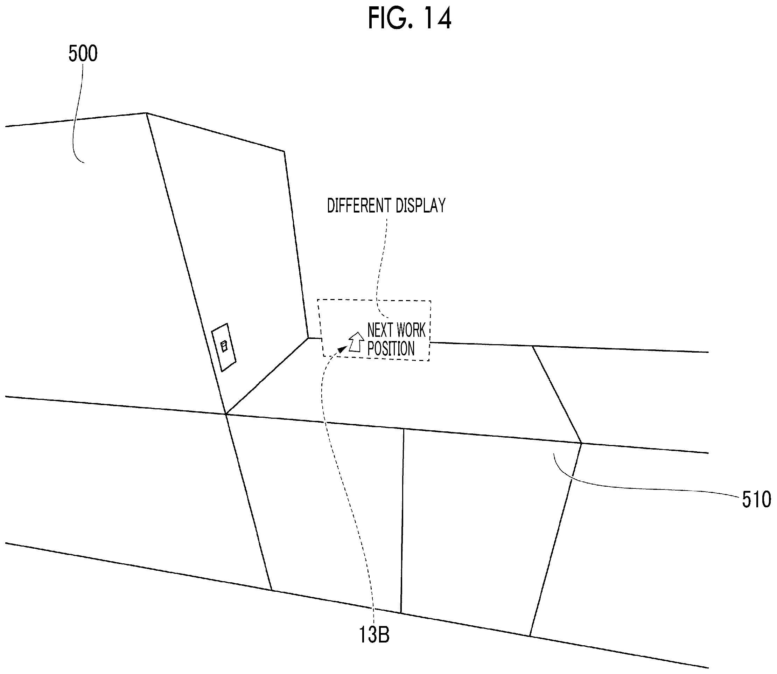

Fig. 14 is a diagram showing a display after the operator 20 responds to the transition reception display 538 shown in Fig. 8.

As described above, in a case where a response from the operator 20 to the transition reception display 538 is present, the CPU 21a deletes the transition reception display 538 that has been displayed before the response is given.

In addition, in a case where a response from the operator 20 to the transition reception display 538 is present, the CPU 21a performs display different from the transition reception display 538 in a location where the transition reception display 538 is displayed as shown in Fig. 14.

For example, the CPU 21a displays, an image including the text "The operation panel has been moved. Please move to the next work position." in the location where the transition reception display 538 is displayed as this different display.

In the present exemplary embodiment, the CPU 21a displays information indicating that the transition reception display 538 is displayed in another location, in the location where the transition reception display 538 is displayed in this way.

In addition, the CPU 21a displays information indicating that the other work location 510 is a new work location 510, in the location where the transition reception display 538 is displayed.

In a case where the transition reception display 538 is only deleted, there is a concern that the operator 20 may not easily grasp whether or not the operation performed by the operator 20 on the transition reception display 538 is successful.

On the other hand, in a case where the different display described above is performed, the operator 20 can easily grasp that the operation performed by the operator 20 on the transition reception display 538 is successful.

In the present exemplary embodiment, the transition reception display 538 is displayed in a form in which the transition reception display 538 is associated with the work location 510. In a case where the transition reception display 538 is displayed for each work unit, the transition reception display 538 is displayed in a form in which the transition reception display 538 is associated with the work unit.

Each time the work location 510 that is the target of the work of the operator 20 changes, the CPU 21a displays the transition reception display 538 in a form in which the transition reception display 538 is associated with the work location 510 after the change.

In addition, each time the work unit that is the target of the work of the operator 20 changes, the CPU 21a displays the transition reception display 538 in a form in which the transition reception display 538 is associated with the work unit after the change.

Here, the "the transition reception display 538 is displayed in a form in which the transition reception display 538 is associated with the work location 510" also refers to a display form of the transition reception display 538 in which the transition reception display 538 is visible in a form associated with the work location 510.

In addition, "the transition reception display 538 is displayed in a form in which the transition reception display 538 is associated with the work unit" refers to a display form of the transition reception display 538 in which the transition reception display 538 is visible in a form associated with the work unit.

The CPU 21a does not display the transition reception display 538 corresponding to the work location 510 that is not a target of the work to be performed by the operator 20.

In addition, the CPU 21a does not display the transition reception display 538 corresponding to the work unit that is not a target of the work to be performed by the operator 20.

It is not excluded that the transition reception display 538 is displayed in a form associated with all the work locations 510 or each of all the work units. In this case, a plurality of transition reception displays 538 are displayed simultaneously within the field of view of the operator 20.

However, for example, a more preferable aspect is an aspect in which the transition reception display 538 corresponding to the work location 510 or the work unit that is not a target of the work to be performed by the operator 20 is not displayed.

In a case where the transition reception display 538 is displayed in a form associated with all the work locations 510 or all the work units, it is difficult to specify which is the latest work location 510 or the latest work unit.

Further, as shown in Fig. 8 and Fig. 13, the CPU 21a displays the transition reception display 538 such that the work target 500 visually recognized by the operator 20 and the transition reception display 538 visually recognized by the operator 20 do not overlap each other.

Here, the term "do not overlap" refers to a state in which the transition reception display 538 is not displayed within an internal space of the work target 500.

In other words, the term "do not overlap" refers to a state in which a position specified by the position coordinates of the display position of the transition reception display 538 is out of the internal space of the work target 500.

In a case where the transition reception display 538 is displayed in a state in which the work target 500 and the transition reception display 538 overlap each other, there is a concern that the operator 20 may not be able to perform the operation on the transition reception display 538.

In a case where the transition reception display 538 is displayed in a state in which the work target 500 and the transition reception display 538 do not overlap each other, this problem is less likely to occur.

The CPU 21a displays not only the transition reception display 538 but also other images that constitute the corresponding image 530 in a manner that does not overlap with the work target 500.

That is, the CPU 21a also displays the end reception display 531, the work content image 532, and the image representing the work order information 533 in a manner that does not overlap the work target 500.

### [Non-Change of Display Position of Transition Reception Display]

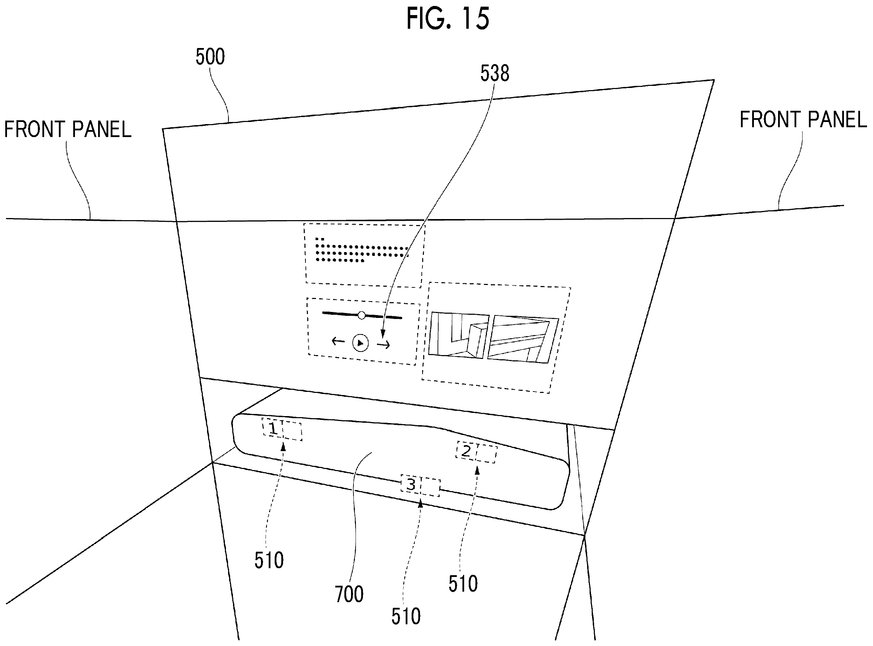

Fig. 15 is a diagram showing another display example.

Fig. 15 shows a state in which a front panel shown in Fig. 7 is opened.

**In** this display example, as in the display shown in Fig. 5, the CPU 21a displays the transition reception display 538 in a number smaller than the total number of work locations 510 that are the targets of the work performed by the operator 20.

In this example, each of the work locations 510 is a work location 510 where work is performed on a common member 700.

In this example, the display of the transition reception display 538 for each work location 510 is not performed. In this example, the CPU 21a displays the transition reception display 538 in a number smaller than the total number of work locations 510 for the common member 700.

In this example, although the total number of work locations 510 is three, one transition reception display 538 is displayed.

As described above, the transition reception display 538 may be displayed for each predetermined work unit.

Even in the example shown in Fig. 15, one transition reception display 538 is displayed corresponding to one work unit in which a plurality of work locations 510 are present.

Here, the CPU 21a does not change the display position of the transition reception display 538 in a stage where the work on each work location 510 included in the work unit is ended.

The CPU 21a changes the display position of the transition reception display 538 in a case where all the work included in the work unit is ended and there is an operation on the transition reception display 538.

In other words, in this case, the CPU 21a displays the transition reception display 538 in the next work location 510 in a case where all the work included in the work unit is ended and there is an operation on the transition reception display 538.

In the example shown in Fig. 15, a member that is a target of work on the previous work location 510 and a member that is a target of work on the next work location 510 are common.

In this case, the CPU 21a does not change the display position of the transition reception display 538 even in a case where a response of the operator 20 to the transition reception display 538 is present in a situation in which only the work on the previous work location 510 has been performed.

In the display shown in Fig. 15, for example, even in a case where the operator 20 performs work on the first work location 510 and a response from the operator 20 to the transition reception display 538 is present, the transition reception display 538 is displayed in a state of being left without being moved.

In this case, it is easy for the operator 20 to recognize that each of the plurality of work locations 510 is the work location 510 for the common member 700.

### [Description of Work Position Display Image]

Next, the work position display image 610 will be described.

In the present exemplary embodiment, as shown in Fig. 4, the CPU 21a displays the work position display image 610, which is an example of a position display image indicating a work position in a case where the operator 20 performs work.

In the present specification, the term "work position" refers to a place where the operator 20 is located in a case where the operator 20 performs work. On the other hand, the term "work location 510" refers to a part of the work target 500 and refers to a location where work is performed by the operator 20.

In the present exemplary embodiment, in a case where the operation is performed on the transition reception display 538 displayed in the previous work location 510, the work position display image 610 is displayed in a form associated with the next work location 510.

Specifically, in the present exemplary embodiment, in a case where the operation is performed on the transition reception display 538 shown in Fig. 8, as shown in Fig. 4, the work position display image 610 is displayed in a form associated with the next work location 510.

In the present exemplary embodiment, the work position display image 610 is displayed in a form corresponding to the next work location 510 where the operator 20 is scheduled to perform the work. Accordingly, it is easy for the operator 20 to specify a next work position.

As described above, Fig. 13 is a diagram showing a state of display of the individual device 200 in a case where the operator 20 wearing the individual device 200 looks at the next work location 510 from a location indicated by a reference symbol 3X in Fig. 4.

As shown in Fig. 13, the CPU 21a displays the work position display image 610. The CPU 21a displays the work position display image 610 such that at least a part of the work position display image 610 is visible in a form located above an upper end portion 511 of the image forming apparatus, which is the work target 500.

In the present exemplary embodiment, the CPU 21a sets coordinates for the display position of the work position display image 610 such that coordinates of an upper end portion 611 of the work position display image 610 are located above the coordinates of the upper end portion 511 of the work target 500.

Alternatively, the coordinates of the display position of the work position display image 610 may be set without considering the coordinates of the upper end portion 511 of the work target 500.

For example, the CPU 21a may perform processing of setting the coordinates of the upper end portion 611 of the work position display image 610 to a location separated from a floor surface by 3 m.

In this case, there is a high probability that the work position display image 610 is displayed in a form in which the upper end portion 611 of the work position display image 610 is located above the work target 500 having a general height.

In the present exemplary embodiment, the work position display image 610 is displayed such that at least a part of the work position display image 610 is visible in a form located above the upper end portion 511 of the work target 500.

Accordingly, the operator 20 can more easily specify the next work position as compared with a case where the work position display image 610 is visible in a form in which the work position display image 610 is located below the upper end portion 511 of the work target 500.

Here, a visual recognition condition in which the following two conditions (1) and (2) are simultaneously satisfied is considered.
(1) The operator 20 performs visual recognition in a state in which a position of the upper end portion 511 of the work target 500 in a height direction and a position of the individual device 200 in the height direction are aligned.
(2) The operator 20 visually recognizes a horizontal direction.

Under these visual recognition conditions, in a case where at least a part of the work position display image 610 is visible above the upper end portion 511 of the work target 500, the case corresponds to "the work position display image 610 is displayed so as to be visible in a form located above the upper end portion 511 of the work target 500".

Depending on the position of the individual device 200 in the height direction, a situation in which the work position display image 610 is not visible in a form located above the upper end portion 511 of the work target 500.

For example, a case where the work target 500 and the work position display image 610, which are located below, are visually recognized from directly above the display location of the work position display image 610 is considered.

**In** this case, there may be a situation in which the work position display image 610 is not visible in a form in which the work position display image 610 is located above the upper end portion 511 of the work target 500.

In the present exemplary embodiment, even in this case, in a case where the work position display image 610 is visible above the upper end portion 511 under the above-described visual recognition condition, the case corresponds to "the work position display image 610 is displayed so as to be visible in a form located above the upper end portion of the work target 500".

In other words, in a case where the work position display image 610 is visible above the upper end portion 511 by changing the conditions for visual recognition, the case corresponds to "the work position display image 610 is displayed so as to be visible in a form located above the upper end portion of the work target 500".

The work position display image 610 will be further described with reference to Fig. 13.

The work position display image 610 of the present exemplary embodiment is a columnar image that is visible in a form extending from bottom to top.

More specifically, the work position display image 610 is a prismatic image that is visible in a form extending from bottom to top. More specifically, the work position display image 610 is an image having a quadrangular prism shape.

The work position display image 610 is not limited to the prismatic image and may be, for example, a cylindrical image. In addition, the work position display image 610 may be a simple sphere, a cube, a rectangular parallelepiped, or the like. The shape of the work position display image 610 is not particularly limited.

In the present exemplary embodiment, in a case where the work of the operator 20 located at the previous work position is ended, the CPU 21a displays the work position display image 610 such that the work position display image 610 is visible in a form located at the next work position.

Accordingly, it is easy for the operator 20 to grasp a next work position.

In a case where the operator 20 performs an operation on the transition reception display 538 displayed in a form associated with the previous work location 510, the CPU 21a deletes the work position display image 610 displayed in association with the previous work location 510.

In addition, in this case, the CPU 21a displays the work position display image 610 such that the work position display image 610 is displayed in a form associated with the next work location 510. Accordingly, the display location of the work position display image 610 is changed.

In the present exemplary embodiment, the work position display image 610 is displayed in a form associated with a work location 510 of the work targets 500, where the work is performed by the operator 20.

In a case where the operator 20 performs an operation on the transition reception display 538 displayed in a form associated with the previous work location 510, the work position display image 610 is displayed in a form associated with a new work location 510 where the work is to be performed from now on.

In displaying the work position display image 610, the CPU 21a displays the work position display image 610 such that the work position display image 610 is visible in a form associated with the new work location 510.

The CPU 21a does not display the work position display image 610 corresponding to the work location 510 that is not a target of the work to be performed by the operator 20.

In the present exemplary embodiment, as described above, the information on the order of work, the positional information of the work location 510, the work position information, and the like are registered in the work management database in a state of being associated with each other.

The CPU 21a refers to the information registered in the work management database to specify a new work location 510 and a new work position described above.

Then, the CPU 21a displays the corresponding image 530 in a form associated with the new work location 510. In addition, the CPU 21a displays the work position display image 610 in a form associated with the new work position.

In the present exemplary embodiment, in a case where the operator 20 performs an operation on the transition reception display 538 displayed in a form associated with the previous work location 510, the corresponding image 530 is displayed in a form associated with the next work location 510.

In addition, in the present exemplary embodiment, in a case where the operator 20 performs an operation on the transition reception display 538 displayed in a form associated with the previous work location 510, the work position display image 610 is displayed in a form associated with the next work position.

In addition, as shown by the reference symbol 13B in Fig. 14, the CPU 21a may further display an image indicating a direction of the next work position in a location other than the display location of the work position display image 610.

As described above, Fig. 14 shows a state after the transition reception display 538 is operated by the operator 20.

In Fig. 14, as an image indicating a direction of the next work position, an image of an arrow is displayed as shown by the reference symbol 13B. By referring to the image of the arrow, the operator 20 can specify the direction of the next work position.

In addition, as shown in Fig. 13, the CPU 21a may further display information on a route 723 through which the operator 20 passes in a case where the operator 20 moves from the current position to the work position.

In this example, the CPU 21a displays an image 724 that appears to extend along the route present within the field of view of the operator 20, as the information on the route 723.

The CPU 21a specifies a position of the individual device 200 with respect to the work target 500 based on the above-described recognition image shown in the video obtained by the device camera 214, for example.

In addition, the CPU 21a acquires the positional information regarding the work position from the work management database.

Further, the CPU 21a specifies, for example, a non-existing region, which is a region where no obstacle is present, based on the output from the LiDAR provided as the sensor 213.

Then, in this case, the CPU 21a generates the image 724 that appears to extend along the route 723, based on the specified position of the individual device 200, the acquired positional information, and the specified non-existing region.

In the present exemplary embodiment, the image 724 is an image extending from the current position of the operator 20 toward the work position and is an image passing through the non-existing region.

In addition, the CPU 21a may display the work position display image 610 such that the entire portion of the work position display image 610 is visible in a form located above the upper end portion 511 of the work target 500.

In this case, the CPU 21a sets coordinates for the display position of the work position display image 610 such that coordinates of a lower end portion 612 of the work position display image 610 are located above the coordinates of the upper end portion 511 of the work target 500.

In addition, the CPU 21a may set the coordinates of the lower end portion 612 of the work position display image 610 to a location that is separated from the floor surface by 2.5 m in an upward direction.

In this case, there is a high probability that the work position display image 610 is displayed in a form in which the lower end portion 612 of the work position display image 610 is located above the work target 500 having a general height.

In this case as well, under the above-described visual recognition condition, in a case where the lower end portion 612 is visible in a form located above the upper end portion 511, the case corresponds to "the lower end portion 612 of the work position display image 610 is visible in a form located above the upper end portion 511 of the work target 500".

In addition, the CPU 21a may display the work position display image 610 such that the upper end portion 611 of the work position display image 610 is visible in a form of reaching the ceiling.

In this case, the CPU 21a detects, for example, the ceiling based on the video obtained by the device camera 214 shown in Fig. 3. Then, the CPU 21a determines coordinates of the display position of the upper end portion 611 of the work position display image 610 based on the result of the detection.

In addition, the CPU 21a may set, for example, coordinates of the position of the upper end portion 611 of the work position display image 610 to a location that is separated from the floor surface by 3 m in the upward direction.

In a normal room, a height of the ceiling is generally determined.

As described above, by setting the coordinates of the position of the upper end portion 611 to a location that is separated from the floor surface by 3 m in the upward direction, the upper end portion 611 of the work position display image 610 is visible in a form of reaching the ceiling.

In addition, in the present exemplary embodiment, as shown in Fig. 13, the CPU 21a displays the work position display image 610 such that the work position display image 610 is visible in a form in which the work position display image 610 is located outside an outer peripheral edge 518 of the work target 500.

In a case where the work target 500 is viewed from above, the outer peripheral edge 518 that serves as a contour is present in the work target 500.

In the example shown in Fig. 13, the work position display image 610 is displayed such that the work position display image 610 is visible in a form in which the work position display image 610 is located outside the outer peripheral edge 518.

In this case, the CPU 21a sets the coordinates for the display position of the work position display image 610 such that the coordinates of the display position of the work position display image 610 are located outside the coordinates of the outer peripheral edge 518 of the work target 500.

In a case where the work position display image 610 is made to be visible in a form in which the work position display image 610 is located outside the outer peripheral edge 518, the operator 20 can easily specify the work position.

In this case, the operator 20 can easily specify the work position as compared with a case where the work position display image 610 is visible in a form in which the work position display image 610 is located inside the outer peripheral edge 518.

Here, a visual recognition condition in which the operator 20 who wears the individual device 200 views the work target 500 from directly above is considered.

Under this visual recognition condition, in a case where the work position display image 610 is visible outside the outer peripheral edge 518 of the work target 500, the case corresponds to "the work position display image 610 is located outside the outer peripheral edge 518 of the work target 500".

In addition, the CPU 21a may change the work position display image 610 according to a positional relationship between the work position to which the work position display image 610 is associated and displayed and the operator 20.

In changing the work position display image 610, for example, the CPU 21a changes at least one of the color or the brightness of the work position display image 610.

For example, in a case where a distance between the work position and the operator 20 is smaller than a predetermined threshold value, the work position display image 610 is deleted or the brightness of the work position display image 610 is reduced.

More specifically, in this case, in a case where the distance between the work position and the individual device 200 worn by the operator 20 is smaller than the predetermined threshold value, the work position display image 610 is deleted or the brightness of the work position display image 610 is reduced.

In specifying the distance between the work position and the individual device 200, the CPU 21a specifies the position of the individual device 200 with respect to the work target 500, based on the above-described recognition image shown in the video obtained by the device camera 214, for example, as in the above-described case.

In addition, the CPU 21a acquires the positional information regarding the work position from the work management database.

Then, the CPU 21a specifies the distance between the work position and the individual device 200, based on the specified position of the individual device 200 and the acquired positional information.

In a case where the display of the work position display image 610 is maintained while the operator 20 is in a state of approaching the work position, there is a concern that the operator 20 may have difficulty in performing work on the work location 510.

On the other hand, in the processing here, in a case where a distance between the work position and the operator 20 is smaller than a predetermined threshold value, the work position display image 610 is deleted or the brightness of the work position display image 610 is reduced.

In this case, the operator 20 can easily visually recognize the work location 510, and can easily perform the work on the work location 510.

### [Display in Case where Work Target and Work Position Display Image Overlap Each Other]

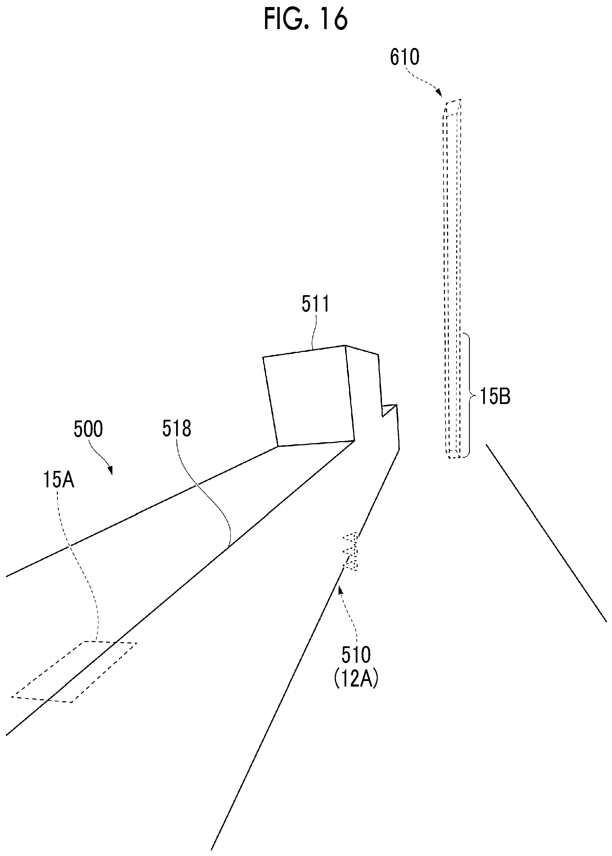

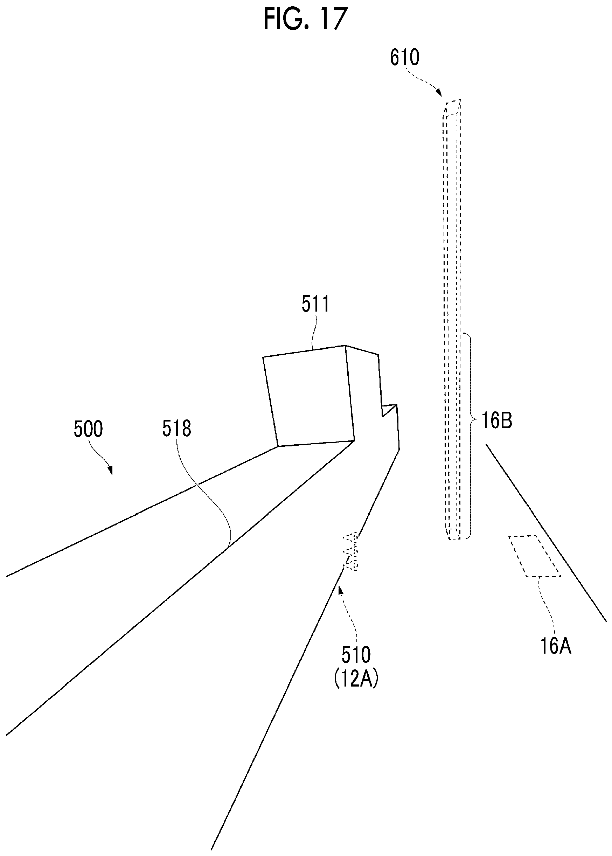

Figs. 16 and 17 are diagrams showing another display example of the work position display image 610.

In addition, in a case where the work position display image 610 and the work target 500 overlap each other as viewed from the operator 20, the CPU 21a may hide a portion of the work position display image 610 that overlaps the work target 500.

Specifically, in a case where the work position is located behind the work target 500 as viewed from the operator 20, the CPU 21a may hide the overlapping portion.

More specifically, in a case where the position coordinates of the work position are located behind the position coordinates of the work target 500 as viewed from the operator 20, the CPU 21a may hide the overlapping portion.

For example, a case where the operator 20 in a crouched state views the work position display image 610 from a location indicated by the reference symbol 15A in Fig. 16 is assumed. A location indicated by the reference symbol 15A is a location located on a front side of the work target 500.

In this case, in a case where the operator 20 views the work position display image 610, a part of the work position display image 610 appears to be located on the front side of the work target 500.

Specifically, a portion indicated by the reference symbol 15B in the work position display image 610 appears on the front side of the work target 500.

In this case, it is difficult for the operator 20 to specify which of the front side or the rear side of the work target 500 is the work position.

In this case, in a case where the overlapping portion is hidden, it is easy for the operator 20 to specify that the rear surface side of the work target 500 is the work position.

In a case where the overlapping portion is hidden, at least a portion of the work position display image 610 indicated by the reference symbol 15B is hidden.

On the other hand, in a case where the work position is located on the front side of the work target 500 as viewed from the operator 20, the CPU 21a may display the overlapping portion.

In this case, in a case where the position coordinates of the work position are located on the front side with respect to the position coordinates of the work target 500 as viewed from the operator 20, the CPU 21a displays the overlapping portion.

For example, as shown in Fig. 17, a work position display image 610 that extends close to the floor is assumed. Further, a case where the operator 20 standing at the location indicated by the reference symbol 16A views the work position display image 610 and the work target 500 is assumed.

In this case, a portion indicated by reference symbol 16B is the overlapping portion. In this case, the overlapping portion indicated by the reference symbol 16B is also displayed. In this case, it is easy for the operator 20 to specify that the front side of the work target 500 is the work position.

### [Addition of Information to Work Position Display Image]

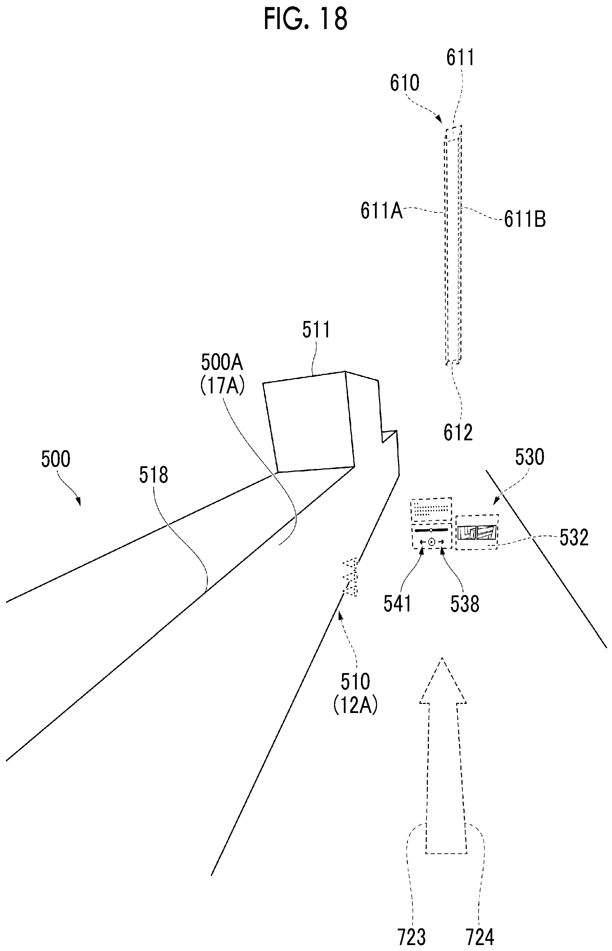

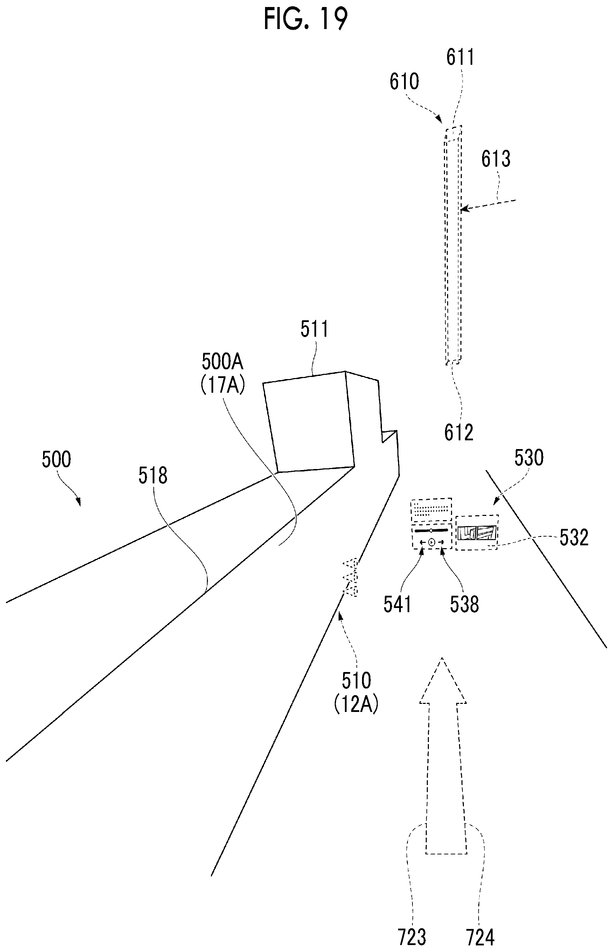

Figs. 18 and 19 are diagrams showing another display example of the work position display image 610.

In addition, the CPU 21a may cause information on one side surface of the work target 500 to be included in a part of the work position display image 610.

The work position is a facing position of any of a plurality of side surfaces of the work target 500. In the present exemplary embodiment, the image forming apparatus serving as the work target 500 is configured in a rectangular parallelepiped shape and has four side surfaces.

The work position is a facing position of any one of the four side surfaces. In Fig. 18, the work position is a facing position of one side surface 500A indicated by the reference symbol 17A.

In this case, one side surface 500A of the work target 500 is a surface located at the facing position of the work position.

Information on one side surface 500A of the work target 500 may be included in a part of the work position display image 610. In this case, it is easy for the operator 20 to specify on which surface of the work target 500 the work location 510, which is located on a part of the work target 500, is located.

Fig. 18 is a diagram showing a display example in a case where information on one side surface 500A is added to the work position display image 610 having a prismatic shape.

**In** this example, the work position display image 610 has a facing outer surface 611A that is an outer surface facing the work target 500 side and an opposite-side outer surface 611B that faces a side opposite to the facing outer surface 611A.

**In** this example, the CPU 21a makes the color of the opposite-side outer surface 611B of a plurality of outer surfaces of the work position display image 610 different from the colors of the other outer surfaces.

**In** this example, the color of the opposite-side outer surface 611B, which is a part of the outer surface, is made different from the colors of the other outer surfaces, so that the information on the one side surface 500A described above is included in a part of the work position display image 610.

In addition, as another form, the color of the facing outer surface 611A facing the work target 500 side may be different from the colors of the other outer surfaces. In this case as well, the information on the one side surface 500A described above can be included in a part of the work position display image 610.

Fig. 19 is a diagram showing another example of the work position display image 610.

In addition, as shown in Fig. 19, the CPU 21a may additionally display an arrow 613 as a part of the work position display image 610. As a result, information on the one side surface 500A described above is included in a part of the work position display image 610.

In addition, for example, the CPU 21a may include text information such as the rear surface of the apparatus, the front surface of the apparatus, the right side surface, and the left side surface as a part of the work position display image 610.

For example, in a case where the text information of "the rear surface of the apparatus" is included in the work position display image 610, the operator 20 can be notified of the information on one side surface 500A.

### [Specifying End of Work based on Video]

Another processing example will be described.

In this processing example, the CPU 21a, which is an example of the processor, acquires a video obtained by the device camera 214, which is an example of an imaging unit included in the individual device 200, and in which the work target 500 is captured.

In the present exemplary embodiment, the work target 500 is an image forming apparatus as described above. The CPU 21a acquires a video in which the image forming apparatus is captured.

Then, the CPU 21a specifies that the work on the work target 500 performed by the operator 20 is ended based on the acquired video. Here, it is specified that the work on each of the above-described work locations 510 is ended based on the video in which the image forming apparatus is captured.

In the above, it is specified that the work on each of the work locations 510 is ended based on the response to the end reception display 531.

The specific method of determining that the work is ended is not limited thereto. The end of the work on each of the work locations 510 may be specified based on the video in which the image forming apparatus is captured.

Here, a location in which the CPU 21a is provided in the individual device 200 can be regarded as an information processing system that specifies that the work is ended based on the video.

The individual device 200 also has a role as a display device and is a device having an image display function. In addition, the individual device 200 is a device worn by the operator 20. The individual device 200 is provided with the device camera 214.

In this processing example, the CPU 21a specifies that the work on the work target 500 performed by the operator 20 is ended based on the video obtained by the device camera 214 of the individual device 200 that is worn by the operator 20.

Specifically, the CPU 21a specifies that the work on each of the plurality of work locations 510 described above is ended based on the video obtained by the device camera 214.

In a case where the CPU 21a specifies that the work on the work location 510 is ended based on the acquired video, the CPU 21a notifies the operator 20 of the next work information that is information on the next work through the individual device 200.

Specifically, in a case where the CPU 21a specifies that the work on the work location 510 is ended based on the acquired video, the CPU 21a displays the above-described corresponding image 530 or the work position display image 610 corresponding to the next work location 510.

The corresponding image 530 and the work position display image 610 corresponding to the next work location 510 include the next work information that is information on the next work.

Specifically, the corresponding image 530 and the work position display image 610 include information such as the content of the next work and the position of the next work, as the next work information.

Here, a specific method of specifying the end of the work based on a video will be described.

The CPU 21a specifies that the work on the work target 500 is ended based on, for example, a trained model generated in advance by machine learning and a video acquired by the device camera 214.

The trained model in this case is a trained model generated by machine learning using training data including a video in which the work target 500 is captured and information on the work target 500 captured in the video, and information on a work status.

The CPU 21a specifies that the work on the work target 500 performed by the operator 20 is ended based on the trained model and the video acquired by the device camera 214.

A case where it is not possible to specify the end of the work based on the acquired video is also assumed.

In this case, the CPU 21a specifies that the work on the work target 500 is ended based on the other information other than the video to be acquired.

Specifically, in this case, the CPU 21a specifies that the work is ended based on, for example, the information input by the operator 20.

In a case where it is not possible to specify that the work is ended based on the acquired video, the CPU 21a performs processing of allowing other information that can specify that the work is ended to be input.

An example of the "other information" is information input by the operator 20.

In a case where it is not possible to specify that the work is ended based on the acquired video, the CPU 21a performs processing of allowing the operator 20 to input information.

Then, in this case, the CPU 21a specifies that the work on the work target 500 is ended based on the information input by the operator 20. Accordingly, in this case as well, the CPU 21a can notify the operator 20 of the above-described next work information.

Examples of the situation in which "it is not possible to specify that the work is ended based on the acquired video" include a situation in which an attempt is made to specify the end of the work but the specifying cannot be performed.

**In** addition, examples of the situation in which "it is not possible to specify that the work is ended based on the acquired video" is a situation in which it is not possible to specify the end of the work due to the content of the work performed by the operator 20.

For example, in a case where the work performed by the operator 20 is replacement of a component, the video before the work and the video after the work may match, and it may not be possible to specify the end of the work performed by the operator 20.

In addition, for example, in a case where the work performed by the operator 20 is work of opening and closing a lid, the video before the work and the video after the work may match, and it may not be possible to specify the end of the work performed by the operator 20.

In these cases, as described above, the end of the work is specified based on other information such as the information input by the operator 20.

Then, in a case where the end of the work is specified based on the other information, as described above, the operator 20 is notified of the next work information. In this case, even in a case where the end of the work cannot be specified based on the video, the operator 20 can proceed to the next work.

Here, in a case where the above-described processing is performed so that the operator 20 inputs the information, for example, as shown in Fig. 5 and the like, the end reception display 531 is displayed. In this case, in a case where a response from the operator 20 to the end reception display 531 is present, it is possible to specify that the work is ended.

In addition, an inquiry such as "Is the work ended?" may be made to the operator 20 via the individual device 200. In this case, in a case where the operator 20 responds that the work is ended, it is possible to specify that the work is ended.

### [Another Method for Specifying End of Work]

In addition, the CPU 21a may specify that the work on the work target 500 performed by the operator 20 is ended based on the information output from the work target 500 to the individual device 200.

In this case, for example, a sensor is provided in the work target 500. Then, first, in the work target 500, it is specified that the work is ended based on the result of the detection by the sensor.

In this case, information indicating that the work is ended is output from the work target 500 to the individual device 200. In addition, only the result of the detection by the sensor may be output from the work target 500 to the individual device 200.

Examples of the sensor include a sensor that detects opening and closing of the lid and a sensor that detects attachment and detachment of a component which is a target for replacement.

In this case, the CPU 21a of the individual device 200 acquires the information output from the work target 500 to the individual device 200. In this case, for example, the transmission/reception unit 219 of the individual device 200 receives information transmitted from the work target 500 and acquires the information from the work target 500.

The communication between the work target 500 and the individual device 200 may be performed using a known technique. The communication between the work target 500 and the individual device 200 may be wired communication or wireless communication.

In addition, the information output from the work target 500 may be transmitted to the individual device 200 via the management server 300.

**In** a case where the individual device 200 acquires the information output from the work target 500, the CPU 21a specifies that the work on the work target 500 performed by the operator 20 is ended based on the information.

Here, the CPU 21a specifies that the work on the work location 510 performed by the operator 20 is ended, based on the acquisition information which is the information acquired by the individual device 200 from the work target 500.

**In** a case where the CPU 21a specifies that the work on the work location 510 performed by the operator 20 is ended, based on the acquisition information, the CPU 21a notifies the operator 20 of the next work information through the individual device 200 as in the above case.

It is assumed that the individual device 200 may not be able to acquire information from the work target 500 due to communication failure or the like. **In** this case, the individual device 200 is in a situation in which the acquisition information from the work target 500 cannot be acquired.

In this case, the CPU 21a specifies that the work on the work target 500 is ended based on information other than the acquisition information.

In a case where the individual device 200 cannot acquire the acquisition information from the work target 500, the CPU 21a performs processing of allowing other information that can specify that the work is ended to be input, for example, as in the above case.

Specifically, as in the above, the CPU 21a performs processing of, for example, allowing the operator 20 to input the information.

As a result, the CPU 21a can specify that the work is ended, as in the above.

Even in a case where the individual device 200 cannot acquire the acquisition information from the work target 500, the CPU 21a specifies that the work on the work target 500 is ended based on information other than the acquisition information.

Then, in a case where the CPU 21a specifies that the work on the work target 500 is ended, the CPU 21a notifies the operator 20 of the next work information as in the above.

### [Display Processing of Corresponding Image in Case where Operator Performs Work]

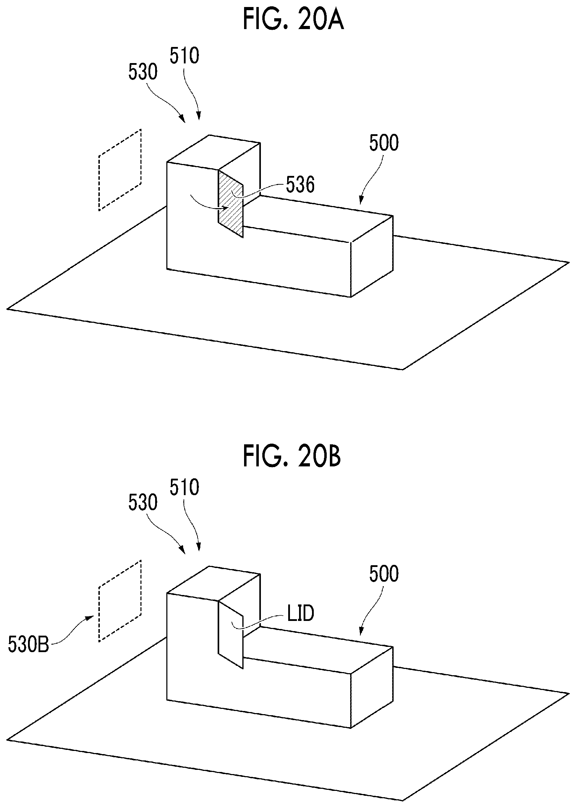

Figs. 20A and 20B are diagrams showing other display examples in the individual device 200.

Even in this example shown in Fig. 20A, the CPU 21a displays the corresponding image 530, which is an image that is visible in a form associated with the work location 510, as the image appearing within the field of view of the operator 20.

In this display example, initially, as a part of the corresponding image 530, an instruction image 536 for instructing the operator 20 to perform work is displayed as shown in Fig. 20A.

The instruction image 536 is an image for instructing the operator 20 to perform a lid opening operation. The instruction image 536 is a so-called animation image and performs a movement that makes the lid appear to be opened.

The instruction image 536 is displayed in an overlapping manner on a part of the work target 500 at a timing at which the lid becomes visible in a closed state.

Specifically, the instruction image 536 is displayed in an overlapping manner on the lid constituting a part of the work target 500 at a timing at which the lid becomes visible in a closed state.

Here, the "display in an overlapping manner on" is not limited to an aspect in which coordinate values of the instruction image 536 are located on an inner side of a part of the work target 500.

The "display in an overlapping manner on" also includes a case where the coordinate values of the instruction image 536 are set on a front side of a part of the work target 500.

In this case as well, the operator 20 views this part and the instruction image 536 in an overlapping manner. Even in a case where the coordinate values of the instruction image 536 are set on a front side of a part of the work target 500, the case falls under "display in an overlapping manner on".

Fig. 20B is a diagram showing a state of display in a case where work on the work location 510 performed by the operator 20 is started.

In this display example, in a case where the work on the work location 510 performed by the operator 20 is started, the CPU 21a changes the display of the displayed corresponding image 530 as shown in Fig. 20B.

In a case where the work on the work location 510 is started, the CPU 21a hides at least a part of the corresponding image 530 or reduces the density of at least a part of the corresponding image 530. Accordingly, it is easy for the operator 20 to perform the work.

In this example, as shown in Fig. 20B, the CPU 21a hides the instruction image 536, which is a part of the corresponding image 530.

As shown in Fig. 20B, in a case where the instruction image 536 is hidden, the operator 20 can easily perform the work on the lid.

In changing the display of the instruction image 536, the processing is not limited to hiding the image, and processing of reducing the density of the display may be performed. In addition, in changing the display of the instruction image 536, processing of reducing the brightness of the display may be performed.

For example, in a case where a request to start work on the work location 510 is received from the operator 20, the CPU 21a changes the display of the corresponding image 530.

Specifically, in a case where a request to start work on the work location 510 is received from the operator 20, the CPU 21a changes the display of the corresponding image 530.

More specifically, for example, in a case where a request to start work on the work location 510 is received from the operator 20 and then a predetermined time elapses, the CPU 21a changes the display of the corresponding image 530.

In the present exemplary embodiment, as described above, in a case where a request to start work on the work location 510 is received from the operator 20, the CPU 21a displays the corresponding image 530.

Specifically, in the present exemplary embodiment, as described above, in a case where a response to the transition reception display 538 that is displayed at the previous work location 510 is present, the corresponding image 530 is displayed at the next work location 510.

In the display example shown in Fig. 20B, a case where the display of the corresponding image 530 is changed after the response to the transition reception display 538 that is displayed at the previous work location 510 is present and a predetermined time elapses, is exemplified.

In this processing example, in a case where a request to start work on the work location 510 is received from the operator 20 and then a predetermined time elapses, the CPU 21a changes the display of the corresponding image 530.

Specifically, in this case, the CPU 21a hides at least a part of the corresponding image 530 as described above. More specifically, the CPU 21a hides the instruction image 536 constituting a part of the corresponding image 530, as described above.

### [Other Display Forms]

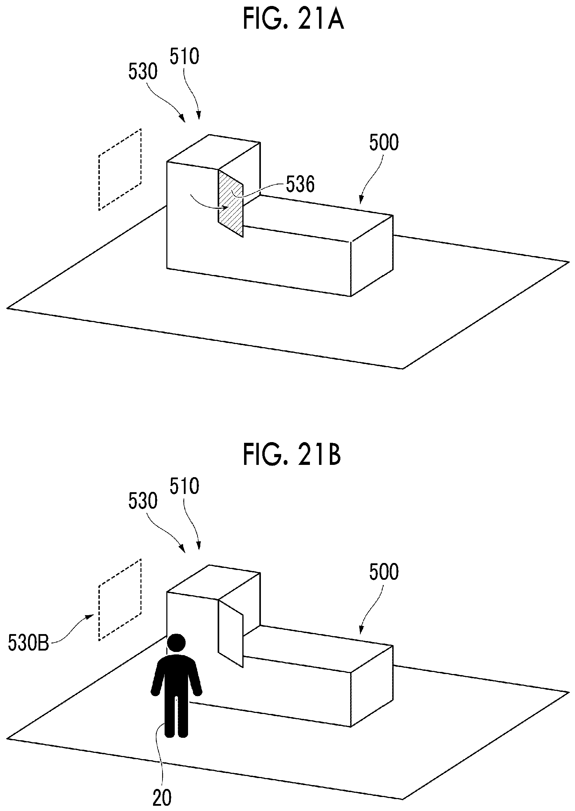

Figs. 21A and 21B are diagrams showing other display forms.

Fig. 21A shows a state of display before the operator 20 approaches the work location 510. Fig. 21B shows a state of display in a case where the operator 20 approaches the work location 510.

As shown in Fig. 21B, the CPU 21a may change the display of the corresponding image 530 in a case where the operator 20 approaches the work location 510.

More specifically, the CPU 21a may change the display of the corresponding image 530 in a case where the operator 20 approaches the work location 510 and a distance between the operator 20 and the work location 510 is smaller than a predetermined threshold value.

More specifically, the CPU 21a may change the display of the corresponding image 530 in a case where a distance between the individual device 200 worn by the operator 20 and the work location 510 is smaller than the predetermined threshold value.

In Figs. 21A and 21B, the individual device 200 worn by the operator 20 is not shown.

In specifying the distance between the individual device 200 and the work location 510, for example, as in the above, a position of the individual device 200 with respect to the work target 500 is specified based on the above-described recognition image shown in the video obtained by the device camera 214.

In addition, the CPU 21a acquires the positional information regarding the work location 510 from the work management database.

Then, the CPU 21a specifies the distance between the individual device 200 and the work location 510, based on the specified position of the individual device 200 and the acquired positional information.

**In** the examples shown in Figs. 21A and 21B, as in the above, the display of the instruction image 536 constituting a part of the corresponding image 530 is changed.

Specifically, the instruction image 536 is changed to be hidden. As in the above, in addition to the change to hide the image, a change to reduce the density or a change to reduce the brightness may be performed.

In addition, in a case where a predetermined time elapses after the display of the corresponding image 530 is performed, the CPU 21a may change the display of the corresponding image 530.

In the present exemplary embodiment, the corresponding image 530 is displayed before the operator 20 starts the work on the work location 510. In the present exemplary embodiment, the new corresponding image 530 is displayed in response to the operation on the previous transition reception display 538 displayed at the previous work location 510.

In a case where a predetermined time elapses after the operation on the previous transition reception display 538 is performed, the display of the newly displayed corresponding image 530 may be changed.

**In** this case, in a case where a predetermined time elapses after the display of the corresponding image 530 is performed, the display of the corresponding image 530 is changed.

In addition, in a case where the above-described predetermined time elapses after the display of the corresponding image 530 is performed and in a case where the operator 20 approaches the work location 510, the CPU 21a may change the display of the corresponding image 530.

In this case, even in a case where the predetermined time elapses, the display of the corresponding image 530 is not changed in a case where the operator 20 does not approach the work location 510.

In addition, in this case, even in a case where the operator 20 is approaching the work location 510, the display of the corresponding image 530 is not changed in a case where the predetermined time does not elapse.

### [Display Form for Maintaining Display of Specific Corresponding Image]

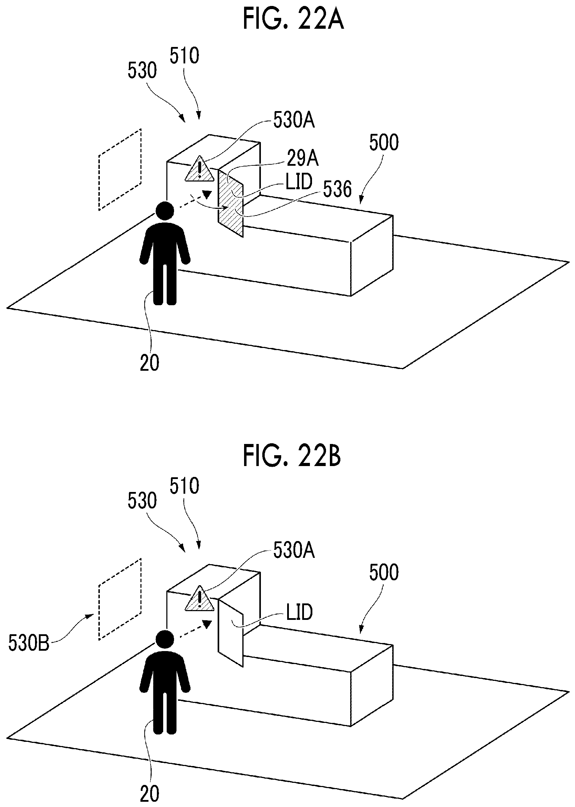

Figs. 22A and 22B are diagrams showing other display examples.

Fig. 22A shows a state before the display is changed. Fig. 22B shows a state after the display is changed.

As shown in Fig. 22B, the display of the specific corresponding image 530A of the corresponding images 530 may not be changed.

Even in a case where the condition for changing the corresponding image 530 is satisfied, the CPU 21a may hide a part of the corresponding image 530 of the corresponding images 530, and may maintain the display of the specific corresponding image 530A.

In other words, even in a case where the condition for changing the corresponding image 530 is satisfied, such as a case where a predetermined time elapses after the corresponding image 530 is displayed, the CPU 21a may maintain the display of the specific corresponding image 530A.

In Fig. 22B, as in the above, the instruction image 536 is hidden, but the display of the specific corresponding image 530A is maintained.

Examples of the "specific corresponding image 530A" include a corresponding image for prompting the operator 20 to pay attention. The specific corresponding image 530A shown in Fig. 22B is a corresponding image for prompting the operator 20 to pay attention.

In the example shown in Figs. 22A and 22B, the CPU 21a maintains the display of the specific corresponding image 530A of the plurality of corresponding images 530 for prompting the operator 20 to pay attention.

The specific corresponding image 530A for prompting the operator 20 to pay attention is displayed, for example, in a state of being associated with a location with a high voltage, a location with a high temperature, a location where a movable member is present, or a location where a member having a sharp portion is present.

Here, the specific corresponding image 530A can also be referred to as the corresponding image 530 displayed in association with a specific portion of the work location 510.

In addition, in Fig. 22B, the display of another "specific corresponding image 530B" is maintained.

The specific corresponding image 530B is a corresponding image 530 that does not interfere with the work of the operator 20. The specific corresponding image 530B is the corresponding image 530 displayed at a location away from the above-described lid that is touched by the operator 20, and is the corresponding image 530 that does not interfere with the work.

Although the description has been omitted above, the specific corresponding image 530B is also present in the display examples shown in Fig. 20B and Fig. 21B. Even in the display examples shown in Fig. 20B and Fig. 21B, the display of the specific corresponding image 530B is maintained.

The CPU 21a maintains the display of the corresponding image 530 for prompting the operator 20 to pay attention or the corresponding image 530 associated with the specific portion, among the corresponding images 530.

In addition, the CPU 21a maintains the display of the corresponding image 530 that does not interfere with the work of the operator 20, among the corresponding images 530.

Here, the instruction image 536 shown in Fig. 22A can also be referred to as the corresponding image 530 displayed in an overlapping manner on a contact location 29A.

In the present exemplary embodiment, the corresponding image 530 displayed in an overlapping manner on the contact location 29A is deleted as shown in Fig. 22B.

On the other hand, in the examples shown in Figs. 22A and 22B, the display of the corresponding image 530 displayed at a location separated from the contact location 29A is maintained.

The contact location 29A that the operator 20 touches is present at the work location 510. In the examples shown in Figs. 22A and 22B, the lid portion is the contact location 29A.

In the examples shown in Figs. 22A and 22B, the corresponding image 530 displayed in an overlapping manner on the contact location 29A, among the corresponding images 530, is deleted.

The instruction image 536 corresponds to the corresponding image 530 displayed in an overlapping manner on the contact location 29A.

On the other hand, in Figs. 22A and 22B, the display of another corresponding image 530 displayed at a location separated from the contact location 29A is maintained.

In addition, in a case where the operator 20 starts the work on the work location 510, the CPU 21a may change the display of the corresponding image 530 located on the straight line connecting the operator 20 and the contact location 29A among the corresponding images 530.

More specifically, in a case where the operator 20 starts the work on the work location 510, the CPU 21a may change the display of the corresponding image 530 located on the straight line connecting the individual device 200 and the contact location 29A among the corresponding images 530.

The instruction image 536 shown in Fig. 22A corresponds to the corresponding image 530 located on the straight line connecting the operator 20 and the contact location 29A.

The processing shown in Figs. 22A and 22B can also be said to be processing of changing the display of the corresponding image 530 located on the straight line connecting the operator 20 and the contact location 29A.

Here, in specifying the corresponding image 530 located on the straight line connecting the operator 20 and the contact location 29A, for example, a position of the individual device 200 with respect to the work target 500 is specified based on the above-described recognition image shown in the video obtained by the device camera 214.

In addition, in specifying the corresponding image 530 located on the straight line connecting the operator 20 and the contact location 29A, the CPU 21a acquires the positional information on the work location 510 from the work management database.

Then, the CPU 21a specifies the corresponding image 530 located on the straight line connecting the operator 20 and the contact location 29A, based on the specified position of the individual device 200 and the acquired positional information.

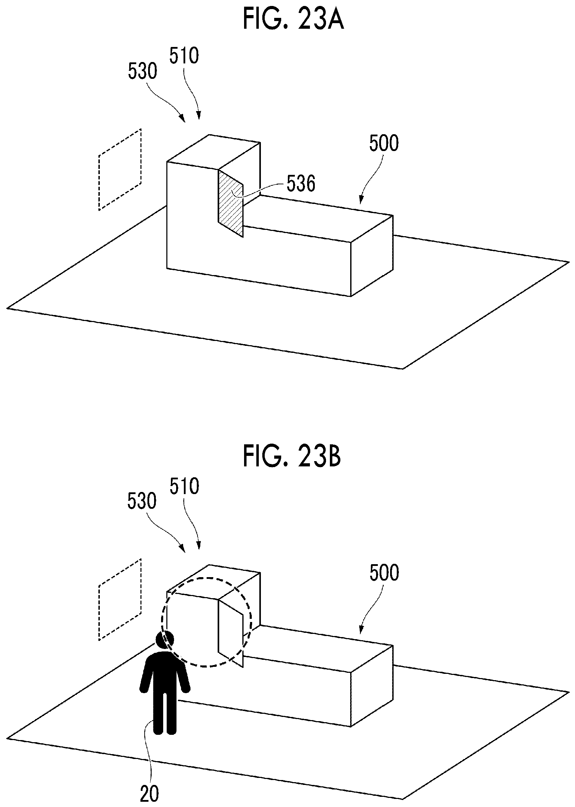

Figs. 23A and 23B are diagrams showing other display examples.

Fig. 23A shows a state before the display is changed. Fig. 23B shows a state after the display is changed. In Fig. 23B, the operator 20 approaches the work target 500.

In a case where the operator 20 starts the work on the work location 510, the CPU 21a may change the display of the corresponding image 530 located within a predetermined distance from the operator 20 among the corresponding images 530, as shown in Fig. 23B.

More specifically, in a case where the operator 20 starts the work on the work location 510, the CPU 21a may change the display of the corresponding image 530 located within a predetermined distance from the individual device 200 among the corresponding images 530.

As an aspect of changing the display, as in the above, an aspect in which at least a part of the corresponding image 530 is hidden, an aspect in which a density of at least a part of the corresponding image 530 is reduced, or an aspect in which a brightness of at least a part of the corresponding image 530 is reduced is exemplified.

In Fig. 23B, as in the above, processing of hiding the instruction image 536 included in the corresponding image 530 is performed.

Here, in specifying the corresponding image 530 located within a predetermined distance from the individual device 200, as in the above, for example, a position of the individual device 200 with respect to the work target 500 is specified based on the recognition image shown in the video obtained by the device camera 214.

In addition, the CPU 21a acquires the positional information regarding the work location 510 from the work management database.

Then, the CPU 21a specifies the corresponding image 530 located within a predetermined distance from the individual device 200 based on the specified position of the individual device 200 and the acquired positional information.

In addition, in a case where the operator 20 starts the work on the work location 510, the CPU 21a may change the display of the corresponding image 530 designated by the operator 20 among the corresponding images 530.

The corresponding images 530 that need to be displayed or do not need to be displayed may vary depending on the operator 20.

The display of the corresponding image 530 is changed in response to the request of the operator 20 by changing the display of the corresponding image 530 that is designated by the operator 20. **In** this case, the display of the corresponding image 530 that is not designated by the operator 20 is maintained.

**In** a case where the operator 20 designates the corresponding image 530, for example, the corresponding image 530 is temporarily displayed within the field of view of the operator 20.

Then, the operator 20 performs an operation on the individual device 200 to designate, from among the displayed corresponding images 530, the corresponding image 530 of which the display is to be changed.

In addition, even in a case where the display of the corresponding image 530 is changed, the corresponding image 530 may be displayed again in the original state in a case where the operator 20 subsequently gives an instruction to display the corresponding image 530.

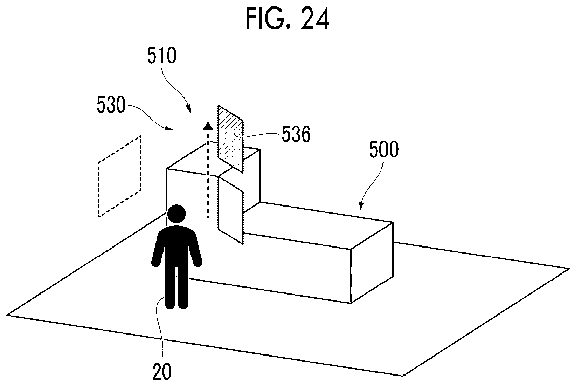

Fig. 24 is a diagram showing another display example.

In addition, the CPU 21a may change a display position of the corresponding image 530 in a case where the operator 20 starts the work on the work location 510.

In this case, for example, the CPU 21a displays the corresponding image 530 in a form in which the corresponding image 530 is visible at a position farther from the work location 510 such that the display position of the corresponding image 530 is changed, as shown in Fig. 24. **In** this example, the display of the corresponding image 530 is changed such that the instruction image 536 faces upward.

Also in this case, the operator 20 can more easily visually recognize the work location 510.

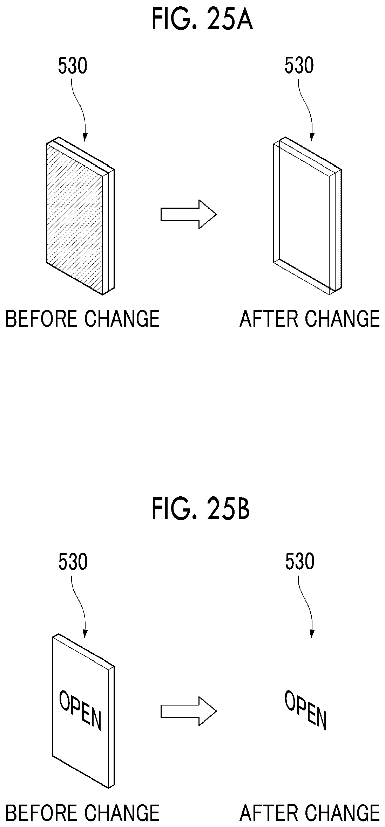

Figs. 25A and 25B are diagrams showing other examples of changes in the display of the corresponding image 530.

The form of changing the display of the corresponding image 530 is not limited to the above-described form.

As a change in the display of the corresponding image 530, as shown in Fig. 25A, the display may be changed such that only a part of the corresponding image 530, such as a contour portion, remains.

In addition, as shown in Fig. 25B, for example, the display may be changed such that only a portion of the text remains in the corresponding image 530 composed of the figure and the text.

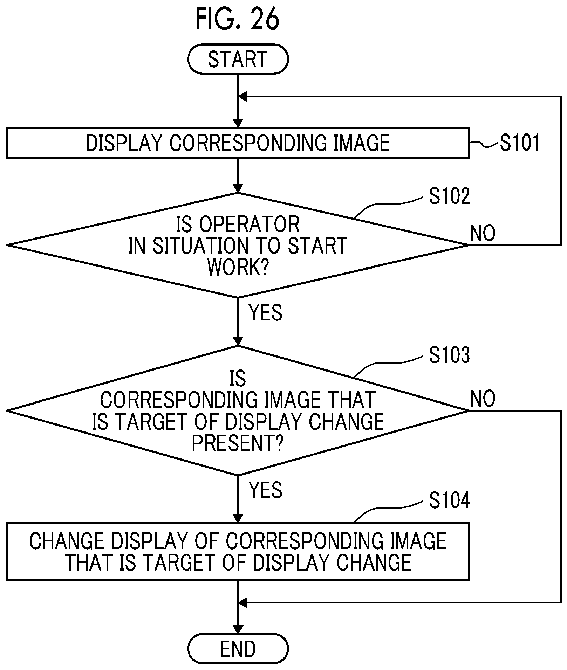

Fig. 26 is a diagram showing an example of a flowchart showing a flow of the above-described processing of changing the display.

In the present exemplary embodiment, the CPU 21a first displays the corresponding image 530 (Step S101). Next, the CPU 21a determines whether or not the operator 20 is in a situation to start the work (Step S102).

Then, in a case where the CPU 21a determines that the operator 20 is in the situation to start the work, the CPU 21a determines whether or not the corresponding image 530 that is a target of display change is present (Step S103).

On the other hand, in a case where the CPU 21a does not determine that the operator 20 is in the situation to start the work in Step S102, the CPU 21a returns to the processing of Step S101.

In a case where the CPU 21a determines that the corresponding image 530 that is a target of the display change is present in Step S103, the CPU 21a changes the display of the corresponding image 530 that is a target of the display change (Step S104).

On the other hand, in a case where the CPU 21a does not determine that the corresponding image 530 that is a target of the display change is present in Step S103, the CPU 21a ends the processing. In this case, the display of the corresponding image 530 is maintained.

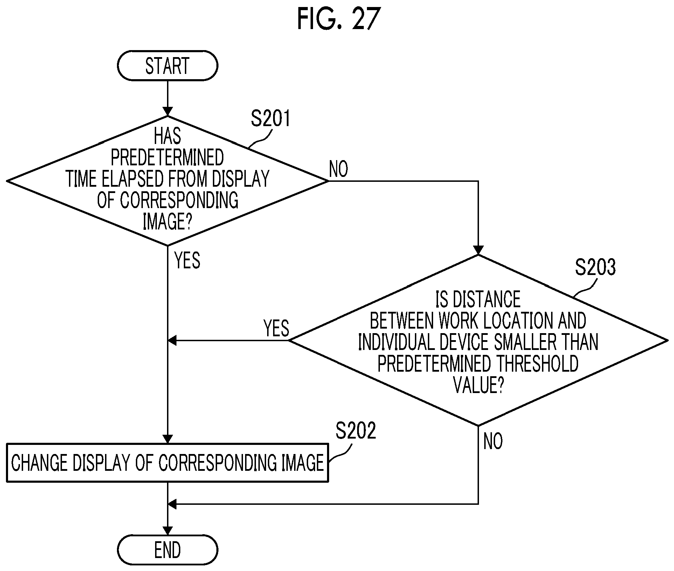

Fig. 27 is a diagram showing an example of a flowchart showing a flow of the above-described processing of changing the display.

In this processing, first, the CPU 21a determines whether or not a predetermined time has elapsed from the display of the corresponding image 530 (Step S201).

Then, in a case where the CPU 21a determines that the predetermined time has elapsed in Step S201, the display of the corresponding image 530 is changed (Step S202).

On the other hand, in a case where the CPU 21a does not determine that the predetermined time has elapsed in Step S201, the CPU 21a determines whether or not a distance between the work location 510 and the individual device 200 is smaller than the predetermined threshold value (Step S203).

Then, in a case where the CPU 21a determines that the distance is smaller than the predetermined threshold value in Step S203, the CPU 21a executes the processing of Step S202 to change the display of the corresponding image 530.

On the other hand, in a case where the CPU 21a does not determine that the distance is smaller than the predetermined threshold value in Step S203, the CPU 21a ends the processing. In this case, the display of the corresponding image 530 is not changed.

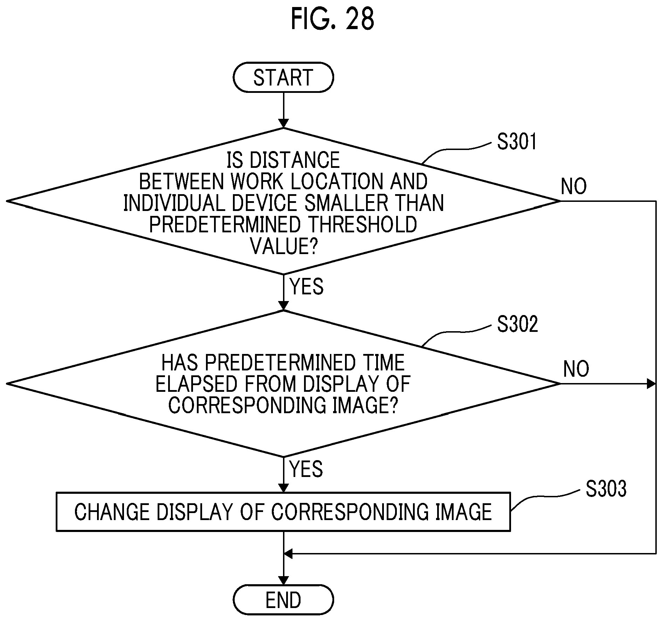

Fig. 28 is a diagram showing an example of a flowchart showing a flow of the above-described processing of changing the display.

In this processing, first, the CPU 21a determines whether or not a distance between the work location 510 and the individual device 200 is smaller than a predetermined threshold value (Step S301).

Then, in a case in which the CPU 21a determines that the distance between the work location 510 and the individual device 200 is smaller than the predetermined threshold value, the CPU 21a determines whether or not a predetermined time has elapsed from the display of the corresponding image 530 (Step S302).

Then, in a case where the CPU 21a determines that the predetermined time has elapsed, the CPU 21a changes the display of the corresponding image 530 (Step S303).

On the other hand, in a case where the CPU 21a does not determine that the distance is smaller than the predetermined threshold value in Step S301, the CPU 21a ends the processing.

In addition, in Step S302, even in a case where it is not determined that the predetermined time has elapsed, the CPU 21a ends the processing.

In a case where the processing of Step S303 is not performed, the display of the corresponding image 530 is not changed.

### [Display Processing Accompanying Interruption of Work]

In addition, in a case where the work on the work location 510 performed by the operator 20 is interrupted, the CPU 21a may display a corresponding image 530 which is an image representing the work content at the work location 510.

In this case as well, the CPU 21a displays the corresponding image 530 such that the corresponding image 530 is visible in a form associated with the work location 510.

More specifically, in this case, for example, in a case where the operator 20 moves away from the work location 510, the CPU 21a determines that the work is interrupted, and displays the corresponding image 530.

In a case where this processing is performed, even in a case where an operation is performed on the transition reception display 538 that is displayed corresponding to the previous work location 510, the corresponding image 530 corresponding to the next work location 510 is not displayed.

In addition, in a case where this processing is performed, even in a case where an operation is performed on the transition reception display 538 that is displayed corresponding to the previous work location 510 and the operator 20 approaches the next work location 510, the corresponding image 530 is not displayed.

On the other hand, in a case where this processing is performed, the corresponding image 530 is displayed in a case where it is determined that the work performed by the operator 20 is interrupted, such as the operator 20 moves away from the work location 510.

Whether or not the operator 20 has moved away from the work location 510 can be determined based on the video obtained by the device camera 214.

More specifically, in this processing, in a case where the operator 20 has moved away from the work location 510 in a situation where the work performed by the operator 20 is not yet ended, the corresponding image 530 is displayed.

In a case of the operator 20 with rich experience in work, it is assumed that the display of the corresponding image 530 is not necessary. On the other hand, even the operator 20 with rich experience in work may forget the content of the work in some cases.

In the present exemplary embodiment, the corresponding image 530 is displayed, for example, in a case where the operator 20 with rich experience in work forgets the content of the work. Accordingly, the operator 20 can confirm the content of the work.

Some of the corresponding images 530, such as the corresponding image 530 for prompting attention, the corresponding image 530 associated with the specific portion, and the corresponding image 530 displayed at a location away from the work location 510, may be displayed from the beginning.

In this case, in a case where it is determined that the work is interrupted, in addition to some of the corresponding images 530, other corresponding images 530 are additionally displayed.

In addition, whether or not the work performed by the operator 20 is interrupted may be determined by the following method.

For example, it may be determined whether or not the operator 20 holds a tool. In this case, for example, whether or not the operator 20 holds the tool is determined based on the video obtained by the device camera 214.

In this case, in a case where the operator 20 holds the tool, it is determined that the work is in progress, and in a case where the operator 20 does not hold the tool, it is determined that the work is interrupted.

In addition, whether or not the work performed by the operator 20 is interrupted may be determined based on the visual line of the operator 20. In this case, in a case where the visual line is not directed toward the work location 510, it is determined that the work is interrupted. In addition, for example, in a case where the visual line of the operator 20 is not fixed, it is determined that the work is interrupted.

In addition, the determination may be made based on the position of the hand of the operator 20. In this case, in a case where the position of the hand is separated from the work location 510, it is determined that the work is interrupted.

In addition, in a case where the operator 20 is in a specific posture, such as looking at the work target 500 from below, it is determined that the work is in progress. On the other hand, in a case where the operator 20 is in another specific posture, such as an upright standing posture, it is determined that the work is interrupted. The posture of the operator 20 can be specified based on the video obtained by the device camera 214 or the output from the sensor 213.

### [Description of Region Corresponding Image]

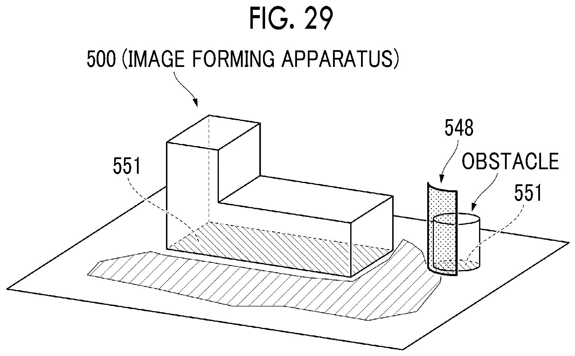

Fig. 29 is a diagram showing a region corresponding image 548.

The region corresponding image 548 will be described.

Although the description has been omitted above, in the present exemplary embodiment, the CPU 21a performs processing of not displaying the region corresponding image 548 for the image forming apparatus that is the work target 500.

In the present exemplary embodiment, as shown in Fig. 29, the CPU 21a performs processing of causing the display device 217 to display the region corresponding image 548, which is an image that is visible in a form associated with an object installation region 551 that is a region in which the object is placed.

More specifically, the CPU 21a performs processing of displaying the region corresponding image 548 that is visible in a form associated with the object installation region 551 that is a region in which the object is placed, among regions on the floor surface existing in the real space that is visually recognized by the operator 20.

The region corresponding image 548 is displayed, for example, in a form of being seen at a boundary between the object installation region 551 and a region located surrounding the object installation region 551.

The region corresponding image 548 may be displayed at all times, or may be displayed in a case where the operator 20 approaches the object installation region 551.

In a case where the region corresponding image 548 is displayed, it is possible to notify the operator 20 of the presence of the object, and a problem such as the operator 20 bumping into the object is less likely to occur. In other words, the safety of the operator 20 is more easily ensured.

On the other hand, the CPU 21a does not display the region corresponding image 548 for the object installation region 551, which is a region in which the image forming apparatus, which is an example of a specific object, is placed.

The present invention is not limited to not displaying the region corresponding image 548. In addition, the region corresponding image 548 may be displayed in a different display form, for example, by reducing the density of the display or the brightness of the display.

Accordingly, the operator 20 can easily perform work on the image forming apparatus, which is the work target 500, as compared with a case where the region corresponding image 548 is uniformly displayed.

The region in which the image forming apparatus is installed is an object installation region 551 in which an object that is a target of the work performed by the operator 20 is placed.

The CPU 21a does not display the region corresponding image 548 for the object installation region 551 in which the object that is a target of the work performed by the operator 20 is placed.

In the present exemplary embodiment, as described above, the three-dimensional data of the image forming apparatus, which is the work target 500 existing in the real space, is registered in advance in the information storage unit 212 of the individual device 200.

The CPU 21a specifies the image forming apparatus based on the above-described recognition image shown in the video obtained by the device camera 214.

Then, the CPU 21a does not display the region corresponding image 548 for the region specified by the three-dimensional data of the image forming apparatus in which the specified image forming apparatus is located.

In the technique of synthesizing the image with the real space as in the present exemplary embodiment, there is known processing of scanning the environment around the user such as the operator 20 and setting a continuous floor surface as the safe area.

In a case where this processing is performed, the image forming apparatus, which is the work target 500, is determined to be an obstacle. In this case, in a case where the region corresponding image 548 is displayed in a form associated with the image forming apparatus, it is difficult for the operator 20 to perform the work on the work target 500.

On the other hand, in the present exemplary embodiment, the region corresponding image 548 is not displayed for the object installation region 551 in which the object that is a target of the work performed by the operator 20 is placed. Accordingly, the operator 20 can easily perform the work on the work target 500.

In preventing the region corresponding image 548 from being displayed, the CPU 21a does not display the region corresponding image 548 for the object installation region 551 in which an object that is designated by the operator 20 is placed.

In the present exemplary embodiment, the operator 20 adds the above-described recognition image to the image forming apparatus in advance, and further registers the three-dimensional data of the image forming apparatus. Accordingly, the operator 20 designates the object for which the region corresponding image 548 is not to be displayed.

In addition, in designating the object, the operator 20 may perform an operation of making the object corresponding image 570 shown in Fig. 7 appear in an overlapping manner on the object to be designated, and may perform the designation.

**In** this case, the CPU 21a does not display the region corresponding image 548 for the object installation region 551 in which the specific object that is designated by the designation is placed.

The CPU 21a does not display the region corresponding image 548 for the object installation region 551 in which the specific object designated by the operation of making the object corresponding image 570 appear in an overlapping manner on the specific object is placed.

**In** a case where this processing is performed, as in the above, the object corresponding image 570, which is an image representing an object and is generated based on the three-dimensional data, is displayed within the field of view of the operator 20 by the display device 217.

Then, the operator 20 performs an operation of making the object corresponding image 570, which appears within the operator's field of view, appear in an overlapping manner on a specific object such as the image forming apparatus, and designates the specific object.

The operator 20 performs an operation of moving the operator's head or manually moving the object corresponding image 570, which appears to float in the air, so that the object corresponding image 570 is visible in an overlapping manner on the specific object.

**In** a case where the object corresponding image 570 is visible in an overlapping manner on the specific object, the operator 20 performs the confirmation processing by operating the decision button or the like.

In addition, in a case where the specific object is designated using the object corresponding image 570, the three-dimensional data of the specific object is stored in advance in the information storage unit 212.

In this case, the CPU 21a of the individual device 200 can specify which of the device coordinate systems, which are the coordinate systems of the individual device 200, each part of the specific object is located in.

Thereafter, the individual device 200 is moved or the posture of the individual device 200 is changed. In this case, the CPU 21a corrects the information on the position of each unit obtained in the confirmation processing described above to obtain the latest information on the position of each unit.

Specifically, the CPU 21a of the individual device 200 corrects the information on the position of each unit based on the amount of movement of the individual device 200 and the amount of change of the posture of the individual device 200 to obtain the latest information on the position of each unit.

Then, the CPU 21a of the individual device 200 decides a location where the region corresponding image 548 is not displayed based on the information on the position of each latest portion.

In the present exemplary embodiment, the transmission/reception unit 219 shown in Fig. 3, which functions as the acquisition unit, acquires the three-dimensional data that is the basis of the above-described object corresponding image 570 to be overlaid on the specific object, from, for example, the management server 300.

In the present exemplary embodiment, the object corresponding image 570 is used for designating the object placed on the floor surface. The object corresponding image 570 may be used to designate a region on the floor surface instead of designating the object.

The CPU 21a does not display the region corresponding image 548 for the region designated using the object corresponding image 570 among the object installation region 551.

In addition, the CPU 21a may not display the region corresponding image 548 for the object installation region 551 in which a specific type of object is placed.

In this case, type information that is information on the type of the object is acquired in advance from the operator 20. In this example, for example, information indicating the image forming apparatus is acquired as the type information from the operator 20.

In this case, in a case where the object shown in the video obtained by the device camera 214 shown in Fig. 3 is the image forming apparatus, the CPU 21a does not display the region corresponding image 548 for the object installation region 551 in which the image forming apparatus is placed.

The determination of whether or not the object is the image forming apparatus may be performed using, for example, AI or may be performed by image matching processing.

In addition, the CPU 21a may not display the region corresponding image 548 for the object installation region 551 in which the object that matches the predetermined registered object is placed.

Also in this case, specific information for specifying the object is acquired from the operator 20 in advance. This information may be image data of the object. **In** addition, the information may be information such as a model number.

**In** this case, the CPU 21a does not display the region corresponding image 548 for the object installation region 551 in which an object specified by this information is placed.

### [Display After Moving Part of Processing Target]

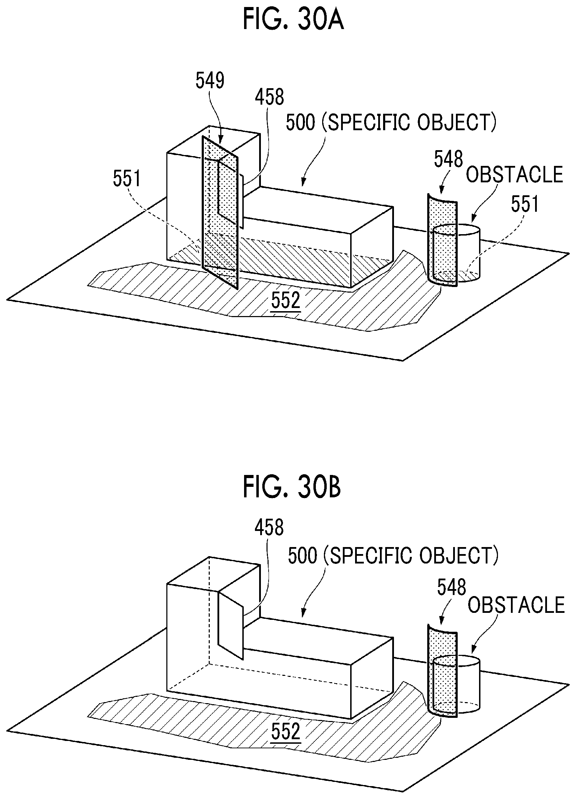

Figs. 30A and 30B are diagrams showing a state after a part of the image forming apparatus is moved.

Fig. 30A shows a state after a part 458 of the image forming apparatus, which is an example of the specific object, is moved in a direction intersecting the vertical direction.

More specifically, Fig. 30A shows a case where the part 458 of the image forming apparatus is moved in the direction intersecting the vertical direction, and the part 458 reaches a space located above an adjacent region 552.

Here, the adjacent region 552 refers to a region adjacent to the object installation region 551 in which the above-described specific object is placed, and is a region in which the object is not placed.

Fig. 30A shows a state in which the part 458 of the image forming apparatus is moved in the direction intersecting the vertical direction, and the part 458 reaches a space located above an adjacent region 552.

**In** this case, as shown in Fig. 30A, the CPU 21a causes the display device 217 to display a partial corresponding image 549, which is an image that is visible in a form associated with the part 458.

More specifically, as in the above, for example, in a case where the operator 20 approaches the part 458, the CPU 21a causes the display device 217 to display the partial corresponding image 549. The partial corresponding image 549 may be displayed at all times.

Accordingly, the operator 20 is likely to notice the part 458, and a situation in which the operator 20 touches the part 458 is less likely to occur.

**In** addition, in a case where the above-described part 458 that has reached the above-described space located above the adjacent region 552 is a predetermined specific portion, the CPU 21a may not display the partial corresponding image 549 as shown in Fig. 30B.

More specifically, in a case where the above-described part 458 that has reached the space located above the adjacent region 552 is a portion that is a target of the operation performed by the operator 20, the CPU 21a may not display the above-described partial corresponding image 549.

In other words, in a case where the above-described part 458 that has reached the space located above the adjacent region 552 is a portion that is a target of the work performed by the operator 20, the CPU 21a may not display the partial corresponding image 549.

As in the above, the present invention is not limited to the processing of not displaying the partial corresponding image 549, and the partial corresponding image 549 having a different display form may be displayed.

As the partial corresponding image 549 having a different display form, as in the above, a partial corresponding image 549 having a low density or a partial corresponding image 549 having a low brightness are exemplified.

As the operator 20 proceeds with the work on the work target 500, a change in the state of the work target 500 may occur. Specifically, the state of the work target 500 may change due to opening and closing of a door, pulling out of components, or the like.

In this case, in a case where the door or the component is a target of the work, the partial corresponding image 549 is not displayed.

On the other hand, the change in the state of the work target 500 may occur unintentionally due to an error in the work, a third party, or the like. In this case, the partial corresponding image 549 is displayed.

The above-described processing of displaying the region corresponding image 548, hiding the region corresponding image 548, displaying the partial corresponding image 549, and hiding the partial corresponding image 549 is not applied only to the display of the work target 500.

The above-described processing of displaying the region corresponding image 548, hiding the region corresponding image 548, displaying the partial corresponding image 549, and hiding the partial corresponding image 549 may also be performed in the daily life of the user, in a game or the like performed in a state in which the individual device 200 is worn.

It is also assumed that the user performs normal life or plays a game in a state of wearing the individual device 200.

In this case, in a case where the region corresponding image 548 or the partial corresponding image 549 is displayed, the safety of the user is ensured, for example.

On the other hand, in some cases, it is assumed that the region corresponding image 548 or the partial corresponding image 549 may be obstructive. In a case where the region corresponding image 548 or the partial corresponding image 549 is deleted or displayed in another display form, the user can easily visually recognize the visually recognized target.

The present invention has been described above. The present invention can also be applied to a program and a program product.

### (Supplementary Note)

(((1))) A control device comprising:
   a processor,
   wherein the control device controls a display device that displays an image appearing within a field of view of a user who visually recognizes a real space, and
   the processor is configured to:
      display, via the display device, a corresponding image that is an image visible in a form associated with an object installation region that is a region in which an object is placed, among regions on a floor surface existing in the real space visually recognized by the user; and
   not display the corresponding image or display the corresponding image in a different display form for the object installation region in which a specific object is placed.
(((2))) The control device according to (((1))), wherein the processor is configured to:
   not display the corresponding image or display the corresponding image in the different display form for the object installation region in which an object designated by the user is placed.
(((3))) The control device according to (((2))),
   wherein an object corresponding image that is an image representing an object and is generated based on three-dimensional data is displayed within the field of view by the display device,
   the user performs an operation such that the object corresponding image appearing within the field of view of the user is visible in an overlapping manner on the specific object and designates the specific object, and
   the processor is configured to:
      not display the corresponding image or display the corresponding image in the different display form for the object installation region in which the specific object designated by the operation of making the object corresponding image visible in an overlapping manner on the specific object is placed.
(((4))) The control device according to (((1))), wherein the processor is configured to:
   not display the corresponding image or display the corresponding image in the different display form for the object installation region in which a specific type of object is placed.
(((5))) The control device according to (((1))), wherein the processor is configured to:
   not display the corresponding image or display the corresponding image in the different display form for the object installation region in which an object matching a predetermined registered object is placed.
(((6))) The control device according to (((1))), wherein the processor is configured to:
   not display the corresponding image or display the corresponding image in the different display form for the object installation region in which an object to which a predetermined image is added is placed.
(((7))) The control device according to (((1))), wherein the processor is configured to:
   not display the corresponding image or display the corresponding image in the different display form for the object installation region in which an object that is a target of work performed by the user is placed.
(((8))) The control device according to any one of (((1))) to (((7))), wherein the processor is configured to:
   in a case where a part of the specific object is moved in a direction intersecting a vertical direction and the part reaches a space located above an adjacent region that is adjacent to the object installation region in which the specific object is placed and in which the object is not placed, display, via the display device, a partial corresponding image that is an image that is visible in a form associated with the part.
(((9))) The control device according to (((8))), wherein the processor is configured to:
   in a case where the part that has reached the space located above the adjacent region is a predetermined specific portion, not display the partial corresponding image or display the partial corresponding image in a different display form.
(((10))) The control device according to (((9))), wherein the processor is configured to:
   in a case where the part that has reached the space located above the adjacent region is a portion that is a target of an operation performed by the user, not display the partial corresponding image or display the partial corresponding image in the different display form.
(((11))) A program executed by a computer that controls a display device that displays an image appearing within a field of view of a user who visually recognizes a real space, the program causing the computer to realize:
   a function of displaying, via the display device, a corresponding image that is an image visible in a form associated with an object installation region that is a region in which an object is placed, among regions on a floor surface existing in the real space visually recognized by the user; and
   a function of not displaying the corresponding image or of displaying the corresponding image in a different display form for the object installation region in which a specific object is placed.
(((12))) A display device that displays an image appearing within a field of view of a user who visually recognizes a real space,
   wherein the display device displays a corresponding image that is an image visible in a form associated with an object installation region that is a region in which an object is placed, among regions on a floor surface existing in the real space visually recognized by the user, and
   the display device comprises an acquisition unit that acquires three-dimensional data of an object corresponding image that is an image representing the object and is displayed within the field of view by the display device and that is used for designating the region on the floor surface or designating the object placed on the floor surface.
(((13))) The display device according to (((12))),
   wherein, in a region of the object installation region that is designated by using the object corresponding image displayed by the display device based on the three-dimensional data, the corresponding image is not displayed or the corresponding image in a different display form is displayed.

With the control device according to (((1))), it is possible to make it easier for the user to visually recognize an object as compared with a case where a corresponding image corresponding to a region is displayed in a form corresponding to the entire region in which the object is placed among the regions on the floor surface and a case where a display form of the corresponding image is not changed.

With the control device according to (((2))), for the object installation region in which the object designated by the user is placed, it is possible to prevent the corresponding image from being displayed or to display the corresponding image in a different display form.

With the control device according to (((3))), for the object installation region in which the object designated by the user is placed, it is possible to prevent the corresponding image from being displayed or to display the corresponding image in a different display form.

With the control device according to (((4))), for the object installation region in which the specific type of object is placed, it is possible to prevent the corresponding image from being displayed or to display the corresponding image in a different display form.

With the control device according to (((5))), for the object installation region in which the object matching the predetermined registered object is placed, it is possible to prevent the corresponding image from being displayed or to display the corresponding image in a different display form.

With the control device according to (((6))), for the object installation region in which the object to which the predetermined image is added is placed, it is possible to prevent the corresponding image from being displayed or to display the corresponding image in a different display form.

With the control device according to (((7))), for the object installation region in which the object that is a target of the work performed by the user is placed, it is possible to prevent the corresponding image from being displayed or to display the corresponding image in a different display form.

With the control device according to (((8))), in a case where a part of the specific object is moved, it is possible to display the partial corresponding image that is an image that is visible in a form associated with the part.

With the control device according to (((9))), in a case where the part of the specific object is the predetermined specific portion, it is possible to prevent the partial corresponding image from being displayed or display the partial corresponding image in a different display form.

With the control device according to (((10))), in a case where the part of the specific object is the portion that is the target of an operation performed by the user, it is possible to prevent the partial corresponding image from being displayed or display the partial corresponding image in the different display form.

With the program according to (((11))), it is possible to make it easier for the user to visually recognize an object as compared with a case where a corresponding image corresponding to a region is displayed in a form corresponding to the entire region in which the object is placed among the regions on the floor surface and a case where a display form of the corresponding image is not changed.

With the display device according to (((12))), it is possible to make it easier for the user to visually recognize an object as compared with a case where a corresponding image corresponding to a region is displayed in a form corresponding to the entire region in which the object is placed among the regions on the floor surface and a case where a display form of the corresponding image is not changed.

With the display device according to (((13))), in a region of the object installation region that is designated by using the object corresponding image displayed by the display device based on the three-dimensional data, it is possible to prevent the corresponding image from being displayed or to display the corresponding image in a different display form.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

20: operator
21a: CPU
200: individual device
211: control device
214: device camera
217: display device
500: work target
500A: one side surface
510: work location
511: upper end portion
518: outer peripheral edge
530: corresponding image
531: end reception display
533: work order information
534: end corresponding image
538: transition reception display
548: region corresponding image
549: partial corresponding image
551: object installation region
570: object corresponding image
610: work position display image
611B: opposite-side outer surface
723: route

## Claims

1. A control device comprising:
a processor,
wherein the control device controls a display device that displays an image appearing within a field of view of a user who visually recognizes a real space, and
the processor is configured to:
display, via the display device, a corresponding image that is an image visible in a form associated with an object installation region that is a region in which an object is placed, among regions on a floor surface existing in the real space visually recognized by the user; and
not display the corresponding image or display the corresponding image in a different display form for the object installation region in which a specific object is placed.

2. The control device according to claim 1, wherein the processor is configured to:
not display the corresponding image or display the corresponding image in the different display form for the object installation region in which an object designated by the user is placed.

3. The control device according to claim 2,
wherein an object corresponding image that is an image representing an object and is generated based on three-dimensional data is displayed within the field of view by the display device,
the user performs an operation such that the object corresponding image appearing within the field of view of the user is visible in an overlapping manner on the specific object and designates the specific object, and
the processor is configured to:
not display the corresponding image or display the corresponding image in the different display form for the object installation region in which the specific object designated by the operation of making the object corresponding image visible in an overlapping manner on the specific object is placed.

4. The control device according to claim 1, wherein the processor is configured to:
not display the corresponding image or display the corresponding image in the different display form for the object installation region in which a specific type of object is placed.

5. The control device according to claim 1, wherein the processor is configured to:
not display the corresponding image or display the corresponding image in the different display form for the object installation region in which an object matching a predetermined registered object is placed.

6. The control device according to claim 1, wherein the processor is configured to:
not display the corresponding image or display the corresponding image in the different display form for the object installation region in which an object to which a predetermined image is added is placed.

7. The control device according to claim 1, wherein the processor is configured to:
not display the corresponding image or display the corresponding image in the different display form for the object installation region in which an object that is a target of work performed by the user is placed.

8. The control device according to any one of claims 1 to 7, wherein the processor is configured to:
in a case where a part of the specific object is moved in a direction intersecting a vertical direction and the part reaches a space located above an adjacent region that is adjacent to the object installation region in which the specific object is placed and in which the object is not placed, display, via the display device, a partial corresponding image that is an image that is visible in a form associated with the part.

9. The control device according to claim 8, wherein the processor is configured to:
in a case where the part that has reached the space located above the adjacent region is a predetermined specific portion, not display the partial corresponding image or display the partial corresponding image in a different display form.

10. The control device according to claim 9, wherein the processor is configured to:
in a case where the part that has reached the space located above the adjacent region is a portion that is a target of an operation performed by the user, not display the partial corresponding image or display the partial corresponding image in the different display form.

11. A program executed by a computer that controls a display device that displays an image appearing within a field of view of a user who visually recognizes a real space, the program causing the computer to realize:
a function of displaying, via the display device, a corresponding image that is an image visible in a form associated with an object installation region that is a region in which an object is placed, among regions on a floor surface existing in the real space visually recognized by the user; and
a function of not displaying the corresponding image or of displaying the corresponding image in a different display form for the object installation region in which a specific object is placed.

12. A display device that displays an image appearing within a field of view of a user who visually recognizes a real space,
wherein the display device displays a corresponding image that is an image visible in a form associated with an object installation region that is a region in which an object is placed, among regions on a floor surface existing in the real space visually recognized by the user, and
the display device comprises an acquisition unit that acquires three-dimensional data of an object corresponding image that is an image representing the object and is displayed within the field of view by the display device and that is used for designating the region on the floor surface or designating the object placed on the floor surface.

13. The display device according to claim 12,
wherein, in a region of the object installation region that is designated by using the object corresponding image displayed by the display device based on the three-dimensional data, the corresponding image is not displayed or the corresponding image in a different display form is displayed.

14. A control method comprising:
displaying, via the display device, a corresponding image that is an image visible in a form associated with an object installation region that is a region in which an object is placed, among regions on a floor surface existing in the real space visually recognized by a user; and
not displaying the corresponding image or displaying the corresponding image in a different display form for the object installation region in which a specific object is placed.
